# EUROPEAN PATENT APPLICATION

(11) **EP 4 827 013 A1**
(43) Date of publication of application: **21.10.2026**
(21) Application number: 24916531.7
(22) Date of filing: 28.10.2024
(51) Int. Cl.: H04B 10/077

(54) **DETECTION METHOD, DETECTION DEVICE, OPTICAL MODULE, AND NETWORK DEVICE**

(30) Priority: 11.01.2024 CN 202410046565
(71) Applicant: Huawei Technologies Co., Ltd., Shenzhen, Guangdong 518129 (CN)
(72) Inventor: MAO, Baoping, Shenzhen, Guangdong 518129 (CN); SU, Changzheng, Shenzhen, Guangdong 518129 (CN); FANG, Yuan, Shenzhen, Guangdong 518129 (CN)
(74) Representative: Huawei European IPR
(86) International application number: PCT/CN2024/127825
(87) International publication number: WO 2025/148480

(57) **Abstract**

Embodiments of this application provide a detection method, a detection device, an optical module, and a network device. The method includes: A first network device sends a target optical signal to a second network device via an optical communication link. The target optical signal includes a service optical signal and a detection optical signal that includes link information. The detection device is in contact with an exterior of the optical communication link, and may obtain the target optical signal from the optical communication link, and obtain the link information based on the detection optical signal in the target optical signal. In this application, the detection device is disposed outside the optical communication link, so that the detection device can obtain the link information from the optical communication link without affecting service transmission between network devices, to detect the optical communication link.

## Description

This application claims priority to Chinese Patent Application No. 202410046565.7, filed with the China National Intellectual Property Administration on January 11, 2024 and entitled "DETECTION METHOD, DETECTION DEVICE, OPTICAL MODULE, AND NETWORK DEVICE", which is incorporated herein by reference in its entirety.

### TECHNICAL FIELD

Embodiments of this application relate to the field of optical communication, and in particular, to a detection method, a detection device, an optical module, and a network device.

### BACKGROUND

In an optical fiber network communication system, an optical communication link between network devices mainly includes an optical fiber, a flange, and an ODF (Optical Distribution Frame, optical distribution frame). In an entire network topology, the optical fiber, flange, and ODF are all passive components for which there are no proactive monitoring means, and therefore, are usually referred to as dumb resources in the industry.

With expansion and rectification of an optical communication network, an optical fiber connection relationship corresponding to the optical communication link between network devices becomes increasingly complex. In a system setup process, it is difficult to record information about a source end or a destination end (namely, a transmitting end and a receiving end) of the optical fiber and path routing information. In a system rectification scenario, a recorded fiber connection relationship of an optical link also changes due to network maintenance or a network cutover. During construction, service provisioning, and subsequent maintenance of the optical fiber network, a quick and effective means is required to identify the optical fiber connection relationship to prevent primary and secondary services from sharing a same optical cable and avoid an incorrect fiber connection relationship record, which may subsequently lead to a network fault.

Currently, when resolving the foregoing problem, a network carrier mainly uses a manual labeling manner. For example, during system setup, an operator records, in a resource management system based on an interconnection relationship of the optical communication link, each fiber jumper connection point that the optical fiber passes through, and prints labels of the source end and destination end information at optical fiber connectors and binds the labels to the optical fiber. In an actual system use scenario or a system maintenance scenario, the operator can identify correspondences between optical cables and optical fibers based on the information recorded in the resource management system and the label information at each connector. In addition, the operator can complete update and tracking of an optical fiber link in the system rectification scenario by manually changing a record and a label.

### SUMMARY

This application provides a detection method, a detection device, an optical module, and a network device. In the method, the detection device may obtain link information identifying an optical communication link without affecting service transmission.

According to a first aspect, this application provides a detection method. The method includes: a first network device sends a target optical signal to a second network device via an optical communication link between the first network device and the second network device, where the target optical signal includes a service optical signal that includes service information and a detection optical signal that includes link information, and the link information includes at least one of device information of the first network device, device information of the second network device, and path routing information of the optical communication link; a detection device obtains the target optical signal transmitted on the optical communication link, where the detection device is in contact with an exterior of the optical communication link; the detection device obtains the link information based on the detection optical signal in the target optical signal; and the second network device receives the target optical signal. In this way, the network device in this application may send the target optical signal including the link information and the service information, to transmit, in the communication link when transmitting the service data, the link information that can identify a topology of the optical communication link. The detection device is disposed outside the optical communication link on which the target optical signal is being transmitted, and the detection device can obtain the target optical signal transmitted on the optical communication link, and obtain, based on the detection optical signal in the target optical signal, the link information corresponding to the optical communication link. Therefore, the optical communication link is detected without affecting service data transmission between network devices, which may be understood as not disrupting a communication connection of the optical communication link. In addition, the detection device can obtain a specific connection status of the optical communication link based on the link information carried in the detection optical signal.

For example, in a process in which the network device continuously sends the target optical signal that includes the service optical signal and the detection optical signal, an operator may dispose the detection device at any position of a to-be-detected optical communication link, to detect the optical communication link. For example, in a scenario in which there are a plurality of optical communication links, a network device connected to a to-be-detected optical communication link sends a target optical signal that includes a detection signal, or each network device on the plurality of communication links may send a target optical signal that includes a detection signal. An operator may dispose the detection device at any position on any optical communication link, to detect the optical communication link. The operator only needs to move the detection device to detect any position on any optical communication link, to provide a quick and convenient detection manner without disrupting an original connection manner of the optical communication link. That is, the optical communication link can be detected without affecting service data transmission.

For example, the detection optical signal is optionally a pilot tone optical signal, and the network device may obtain the target optical signal by using a pilot tone technology.

In a possible implementation, that the detection device obtains the target optical signal transmitted on the optical communication link includes: The detection device obtains the target optical signal coupled out from the optical communication link. In this way, the detection device in this application is disposed outside the optical communication link, and can obtain the target optical signal coupled out from the optical communication link without disrupting the connection status of the optical communication link. When the network device maintains a communication connection, that is, maintains service interaction, the detection device can obtain an optical signal transmitted on the communication link, and further obtain the link information, to detect the optical communication link.

In a possible implementation, a contact portion between the optical communication link and the detection device is curved. In this way, the detection device in this application may obtain an optical signal coupled out from the optical communication link in a macro-bending detection manner. A physical connection of the optical communication link is not damaged, and transmission of a service signal is not affected.

In a possible implementation, a signal frequency of the detection optical signal is lower than a signal frequency of the service optical signal. In this way, by using two different types of optical signals, that is, optical signals of different frequencies, a receiving end (for example, the detection device and/or the second network device) can separate the service optical signal from the detection optical signal. The detection signal in this application can be obtained as a low-frequency detection optical signal from the target optical signal, without affecting a high-frequency service signal.

In a possible implementation, the device information of the first network device includes at least one of the following: identification information of the first network device, identification information of a connection port, corresponding to the optical communication link, in the first network device, and extension information. In this way, in this application, the detection signal carries the link information that includes the device information of the first network device, so that the detection device can obtain a connection status between the optical communication link and a transmitting end (namely, the first network device), and an operator can determine a label and a connection status of the optical communication link based on the link information.

In a possible implementation, the device information of the second network device includes at least one of the following: identification information of the second network device, identification information of a connection port, corresponding to the optical communication link, in the second network device, and extension information. In this way, in this application, the detection signal carries the link information that includes the device information of the second network device, so that the detection device can obtain a connection status between the optical communication link and a receiving end (namely, the second network device), and an operator can determine a label and a connection status of the optical communication link based on the link information.

In a possible implementation, the optical communication link passes through at least one intermediate device, and the path routing information includes at least one of the following: identification information of the intermediate device, and identification information of a connection port, corresponding to the optical communication link, in the intermediate device. In this way, in this application, the detection signal carries the link information that includes the device information of the intermediate device, so that the detection device can obtain a connection status between the optical communication link and the intermediate device, and an operator can determine a label and a connection status of the optical communication link based on the link information.

For example, the optical communication link may include an intermediate device, or may not include an intermediate device.

For example, the detection device may be disposed on the optical communication link in front of any intermediate device, to detect whether a port connection between the optical communication link and the intermediate device, and the like are consistent with those identified in the link information.

For example, the intermediate device may be an active device, or may be a passive device.

In a possible implementation, the extension information includes at least one of the following: module information of an optical module corresponding to the connection port, transmission distance information of the target optical signal, code pattern information of the target optical signal, wavelength information of the target optical signal, optical power information of the target optical signal, and alarm information. In this way, the detection device may obtain more detailed and more statuses of the optical communication link based on other information carried in the link information.

In a possible implementation, the detection optical signal includes a frame header field and a data field. The data field carries the link information, and the frame header field includes a preamble. In this way, a receiving end and a detection end (namely, the detection device) may accurately identify the detection signal based on the preamble, to perform further processing on the detection signal.

In a possible implementation, the data field includes at least one of the following: a first field that carries the device information of the first network device, a second field that carries the device information of the second network device, and a third field that carries the path routing information. The first field includes a first marker, and the first marker indicates that the first field is used to carry the device information of the first network device. The second field includes a second marker, and the second marker indicates that the second field is used to carry the device information of the second network device. The third field includes a third marker, and the third marker indicates that the third field is used to carry the path routing information. In this way, different information may be effectively distinguished by using different marking information, and each piece of information in the link information is separately displayed.

In a possible implementation, that the detection device obtains the link information based on the detection optical signal in the target optical signal includes: The detection device performs optical-to-electrical conversion on the target optical signal, to obtain a detection signal. In this way, based on different frequencies of the detection optical signal and the service optical signal, the detection device may separate the detection signal, and filter out the service signal, to ensure security of service data.

In a possible implementation, that the detection device obtains the link information based on the detection optical signal in the target optical signal includes: The detection device decodes the detection signal in a preset coding manner, to obtain the link information. In this way, both the detection device and a receiving end can decode the detection signal in the specified encoding manner and in the agreed encoding manner, to obtain the link information.

In a possible implementation, that the first network device sends the target optical signal to the second network device via the optical communication link between the first network device and the second network device includes: The first network device obtains the link information; the first network device encodes the link information in the preset coding manner, to obtain encoded link information; and the first network device obtains the target optical signal based on the encoded link information. In this way, the transmitting end encodes the link information in the agreed encoding manner, so that a detection device that also has the encoding and decoding capability can decode the detection optical signal, to obtain the link information. In addition, the first network device (namely, the transmitting end) sends the target optical signal that includes the link information, so that the detection device and the receiving end can obtain the link information, to determine a connection topology of the optical communication link.

In a possible implementation, that the first network device obtains the target optical signal based on the encoded link information includes: The first network device processes the encoded link information, to obtain the detection signal; the first network device obtains a target electrical signal based on the detection signal and the service signal that includes the service information; and the first network device performs optical-to-electrical conversion on the target electrical signal, to obtain the target optical signal. In this way, the first network device superimposes the detection signal and the service signal to obtain the target electrical signal, and then obtains the target optical signal, so that the service signal is not affected, and the detection optical signal that includes the link information can be transmitted.

In a possible implementation, that the first network device obtains the target optical signal based on the encoded link information includes: The first network device processes the encoded link information, to obtain the detection signal; the first network device performs optical-to-electrical conversion on the service signal that includes the service information, to obtain the service optical signal; and the first network device modulates the service optical signal based on the detection signal, to obtain the target optical signal. This application further provides a modulation scheme of a detection signal and a service signal. That is, an optical signal may be modulated based on the detection signal, to obtain the optical signal. Therefore, different modulation schemes can be applied to different types of optical modules.

In a possible implementation, after the second network device receives the target optical signal, the method further includes: The second network device obtains the link information based on the detection optical signal in the target optical signal; and the second network device obtains the service information based on the service optical signal in the target optical signal.

According to a second aspect, this application provides a detection method. The method is applied to a detection device. The detection device is in contact with an exterior of an optical communication link between a first network device and a second network device. The first network device exchanges data with the second network device via the optical communication link. The method includes: obtaining a target optical signal transmitted on the optical communication link, where the target optical signal includes a service optical signal that includes service information and a detection optical signal that includes link information, and the link information includes at least one of device information of the first network device, device information of the second network device, and path routing information of the optical communication link; and obtaining the link information based on the detection optical signal in the target optical signal.

In a possible implementation, that the detection device obtains the target optical signal transmitted on the optical communication link includes: The detection device obtains the target optical signal coupled out from the optical communication link.

In a possible implementation, a contact portion between the optical communication link and the detection device is curved.

In a possible implementation, a signal frequency of the detection optical signal is lower than a signal frequency of the service optical signal.

In a possible implementation, obtaining the link information based on the detection optical signal in the target optical signal includes: performing optical-to-electrical conversion on the target optical signal, to obtain a detection signal; and decoding the detection signal in a preset coding manner, to obtain the link information.

The second aspect and any implementation of the second aspect correspond to the first aspect and any implementation of the first aspect respectively. For technical effects corresponding to the second aspect and any implementation of the second aspect, refer to the technical effects corresponding to the first aspect and any implementation of the first aspect. Details are not described herein again.

According to a third aspect, this application provides a detection method. The method is applied to a first network device, and the method includes: obtaining link information, where the link information includes at least one of device information of the first network device, device information of a second network device, and path routing information of an optical communication link between the first network device and the second network device; and obtaining a target optical signal based on the link information, where the target optical signal includes a service optical signal that includes service information and a detection optical signal that includes the link information; and sending the target optical signal to the second network device.

In a possible implementation, the device information of the first network device includes at least one of the following: identification information of the first network device, identification information of a connection port, corresponding to the optical communication link, in the first network device, and extension information.

In a possible implementation, the device information of the second network device includes at least one of the following: identification information of the second network device, identification information of a connection port, corresponding to the optical communication link, in the second network device, and extension information.

In a possible implementation, the optical communication link passes through at least one intermediate device, and the path routing information includes at least one of the following: identification information of the intermediate device, and identification information of a connection port, corresponding to the optical communication link, in the intermediate device.

In a possible implementation, the extension information includes at least one of the following: module information of an optical module corresponding to the connection port, transmission distance information of the target optical signal, code pattern information of the target optical signal, wavelength information of the target optical signal, optical power information of the target optical signal, and alarm information.

In a possible implementation, the detection optical signal includes a frame header field and a data field. The data field carries the link information, and the frame header field includes a preamble.

In a possible implementation, the data field includes at least one of the following: a first field that carries the device information of the first network device, a second field that carries the device information of the second network device, and a third field that carries the path routing information. The first field includes a first marker, and the first marker indicates that the first field is used to carry the device information of the first network device. The second field includes a second marker, and the second marker indicates that the second field is used to carry the device information of the second network device. The third field includes a third marker, and the third marker indicates that the third field is used to carry the path routing information.

In a possible implementation, obtaining the target optical signal based on the link information includes: encoding the link information in the preset coding manner, to obtain encoded link information; and obtaining the target optical signal based on the encoded link information.

In a possible implementation, obtaining the target optical signal based on the encoded link information includes: processing the encoded link information, to obtain the detection signal; obtaining a target electrical signal based on the detection signal and the service signal that includes the service information; and performing optical-to-electrical conversion on the target electrical signal, to obtain the target optical signal.

In a possible implementation, obtaining the target optical signal based on the encoded link information includes: processing the encoded link information, to obtain the detection signal; performing optical-to-electrical conversion on the service signal that includes the service information, to obtain the service optical signal; and modulating the service optical signal based on the detection signal, to obtain the target optical signal.

The third aspect and any implementation of the third aspect correspond to the first aspect and any implementation of the first aspect respectively. For technical effects corresponding to the third aspect and any implementation of the third aspect, refer to the technical effects corresponding to the first aspect and any implementation of the first aspect. Details are not described herein again.

According to a fourth aspect, this application provides an optical module. The optical module includes a module central processing module, a signal processing module, and a sending port. The module central processing module is configured to obtain link information. The link information includes at least one of device information of a first network device, device information of a second network device, and path routing information of an optical communication link between the first network device and the second network device. The signal processing module is configured to obtain a target optical signal based on the link information. The target optical signal includes a service optical signal that includes service information and a detection optical signal that includes the link information. The sending port is used to send the target optical signal to the second network device.

In a possible implementation, the device information of the first network device includes at least one of the following: identification information of the first network device, identification information of a connection port, corresponding to the optical communication link, in the first network device, and extension information.

In a possible implementation, the device information of the second network device includes at least one of the following: identification information of the second network device, identification information of a connection port, corresponding to the optical communication link, in the second network device, and extension information.

In a possible implementation, the optical communication link passes through at least one intermediate device, and the path routing information includes at least one of the following: identification information of the intermediate device, and identification information of a connection port, corresponding to the optical communication link, in the intermediate device.

In a possible implementation, the signal processing module includes a detection signal processing unit. The module central processing module is specifically configured to encode the link information in the preset coding manner, to obtain encoded link information. The detection signal processing unit is configured to obtain the target optical signal based on the encoded link information.

In a possible implementation, the detection signal processing unit is specifically configured to: process the encoded link information, to obtain the detection signal; obtain a target electrical signal based on the detection signal and the service signal that includes the service information; and perform optical-to-electrical conversion on the target electrical signal, to obtain the target optical signal.

In a possible implementation, the signal processing module further includes a photoelectric conversion unit. The photoelectric conversion unit is configured to perform optical-to-electrical conversion on the service signal that includes the service information, to obtain the service optical signal. The detection signal processing unit is configured to: process the encoded link information, to obtain the detection signal; and modulate the service optical signal based on the detection signal, to obtain the target optical signal.

The fourth aspect and any implementation of the fourth aspect correspond to the first aspect and any implementation of the first aspect respectively. For technical effects corresponding to the fourth aspect and any implementation of the fourth aspect, refer to technical effects corresponding to the first aspect and any implementation of the first aspect. Details are not described herein again.

According to a fifth aspect, this application provides a network device, including one or more processors, a memory, and one or more computer programs. The one or more computer programs are stored in the memory. When the computer program is executed by the one or more processors, the network device is enabled to perform the method performed by the first network device according to the first aspect and any possible implementation of the first aspect.

For example, the network device may be an optical transmission device, an optical access device, an optical switching device, an optical amplification device, a router, a switch, a radio base station, a wireless remote access device, a radio baseband signal processing device, or the like.

For example, the network device is connected to a network management device through a network communication interface, and the network device may exchange information with the network management device through the network communication interface.

For example, the network device may be a device integrating an optical module, or may be an optical module, or may be a board.

According to a sixth aspect, this application provides a detection device, including one or more processors, a memory, and one or more computer programs. The one or more computer programs are stored in the memory. When the computer program is executed by the one or more processors, the network device is enabled to perform the method performed by the detection device according to the first aspect and any possible implementation of the first aspect.

For example, the detection device may include a display, configured to display link information.

For example, the detection device may be connected to an external device such as a printer or a terminal, and is configured to send link information to the external device.

According to a seventh aspect, this application provides a detection system. The communication system includes any one of the foregoing network device and detection device, and a power supply line. The power supply line is configured to supply power to the network device.

In a possible implementation, the system further includes a network management device. The network management device is configured to perform unified management and control on a communication system that the network management device is located.

For example, the network device is connected to the network management device through a network communication interface, and the network device may exchange information with the network management device through the network communication interface.

For example, the detection device, a first network device, and/or a second network device may send obtained link information to the network management device.

### BRIEF DESCRIPTION OF DRAWINGS

FIG. 1 is one of example diagrams of a structure of a communication system;
FIG. 2 is one of example diagrams of a structure of a communication system;
FIG. 3 is one of example diagrams of a structure of a communication system;
FIG. 4 is one of example diagrams of a structure of a communication system;
FIG. 5A is one of example diagrams of a structure of a network device;
FIG. 5B is one of example diagrams of a structure of a network device;
FIG. 6 is an example diagram of an architecture of a detection system;
FIG. 7 is an example diagram of a working procedure of a detection system;
FIG. 8 is an example diagram of a processing procedure on a first network device side;
FIG. 9 is an example diagram of an application scenario;
FIG. 10A is one of example diagrams of a structure of a photoelectric conversion module;
FIG. 10B is one of example diagrams of a structure of a photoelectric conversion module;
FIG. 10C is an example diagram of a structure of an optical signal processing module;
FIG. 11 is an example diagram of a signal processing procedure;
FIG. 12 is one of example diagrams of a data frame format of pilot tone information;
FIG. 13 is one of example diagrams of a data frame format of pilot tone information;
FIG. 14 is an example diagram of a pilot tone technology;
FIG. 15 is an example diagram of a signal processing procedure;
FIG. 16 is one of example diagrams of a structure of a detection instrument;
FIG. 17 is one of example diagrams of a structure of a detection instrument;
FIG. 18 is an example diagram of a processing procedure on a detection instrument side;
FIG. 19 is one of example diagrams of a structure of a photoelectric conversion module;
FIG. 20A is one of example diagrams of a structure of a photoelectric conversion module;
FIG. 20B is one of example diagrams of a structure of a photoelectric conversion module;
FIG. 20C is one of example diagrams of a structure of a signal processing module; and
FIG. 21 is an example diagram of a structure of an apparatus.

### DESCRIPTION OF EMBODIMENTS

The following clearly and completely describes the technical solutions in embodiments of this application with reference to the accompanying drawings in embodiments of this application.

The term "and/or" in this specification describes only an association relationship for describing associated objects and represents that three relationships may exist. For example, A and/or B may represent the following three cases: Only A exists, both A and B exist, and only B exists.

In this specification and claims in embodiments of this application, the terms "first", "second", and the like are intended to distinguish between different objects but do not indicate a particular order of the objects. For example, a first target object, a second target object, and the like are used to distinguish between different target objects, but are not used to describe a specific order of the target objects.

In embodiments of this application, the word such as "example" or "for example" represents giving an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a related concept in a specific manner.

In descriptions of embodiments of this application, unless otherwise stated, "plurality of" means two or more than two. For example, a plurality of processing units mean two or more processing units, and a plurality of systems mean two or more systems.

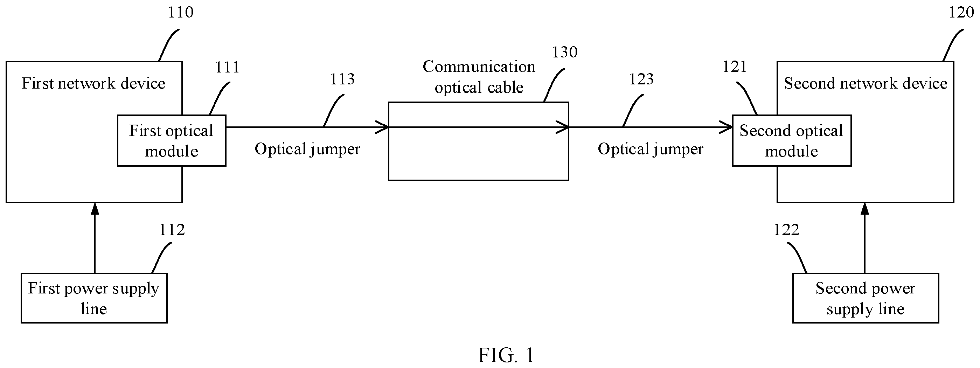

FIG. 1 is an example diagram of a structure of a communication system. With reference to FIG. 1, a communication system in this embodiment of this application includes but is not limited to an electronic device (referred to as a network device in this embodiment of this application) and a power supply line. The network device may be an optical transmission device, an optical access device, an optical switching device, an optical amplification device, a router, a switch, a radio base station, a wireless remote access device, a radio baseband signal processing device, or the like.

As shown in FIG. 1, in the system, a network device includes but is not limited to a first network device 110 and a second network device 120. The first network device 110 includes but is not limited to a first optical module 111. The second network device 120 includes but is not limited to a second optical module 121. The power supply line includes but is not limited to a first power supply line 112 and a second power supply line 122. The first network device 110 exchanges data with the second network device 120 through an optical jumper (for example, including an optical jumper 113 and an optical jumper 123) and a communication optical cable 130. Data exchange may also be understood as optical signal exchange.

For example, an optical signal transmission path in the communication system shown in FIG. 1 may be: The first optical module 111 in the first network device 110 outputs an optical signal, the optical signal is input to the communication optical cable 130 through the first optical jumper 113, and the optical signal output by the communication optical cable 130 is input to the second optical module 121 of the second network device 120 of the second network device through the second optical jumper 123. In this way, optical signal transmission between the first optical module 111 and the second optical module 121 is implemented.

For example, the first power supply line 112 is connected to the first network device 110, and the first power supply line 112 is configured to supply power to the first network device 110. The second power supply line 122 is connected to the second network device 120, and the second power supply line 122 is configured to supply power to the second network device 120.

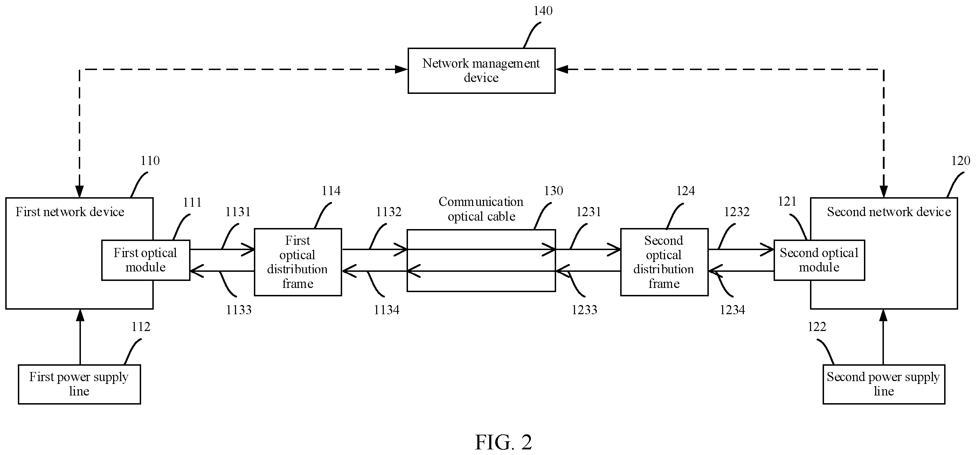

FIG. 2 is an example diagram of a structure of another communication system. With reference to FIG. 2, compared with the communication system shown in FIG. 1, the communication system shown in FIG. 2 further includes but is not limited to a network management device 140, a first optical distribution frame (optical distribution frame, ODF) 114, a second optical distribution frame 124, and a bidirectional optical jumper.

For example, the network management device 140 is configured to provide a management service for the communication system.

For example, the first optical distribution frame 114 is located between the first optical module 111 and the communication optical cable 130. The second optical distribution frame 124 is located between the second optical module 121 and the communication optical cable 130.

In the communication system, an optical jumper between the first network device 110 and the second network device 120 is the bidirectional optical jumper, so that optical signal bidirectional transmission between the first network device 110 and the second network device 120 can be implemented. In other words, the first network device 110 may send an optical signal to the second network device 120, and the second network device 120 may also send an optical signal to the first network device 110.

Still refer to FIG. 2. In an example, an optical signal transmission path in the communication system may be: An optical signal output by the first optical module 111 is input to the communication optical cable 130 through the optical jumper 1131, the first optical distribution frame 114, and the optical jumper 1132, and the optical signal output by the communication optical cable 130 is input to the second optical module 121 through the optical jumper 1231, the second optical distribution frame 124, and the optical jumper 1232.

In another example, an optical signal transmission path in the communication system may be: An optical signal output by the second optical module 121 is input to the communication optical cable 130 through the optical jumper 1234, the second optical distribution frame 124, and the optical jumper 1233, and the optical signal output by the communication optical cable 130 is input to the first optical module 111 through the optical jumper 1134, the first optical distribution frame 114, and the optical jumper 1133. In this way, optical signal bidirectional transmission between the first optical module 121 and the second optical module 122 is implemented.

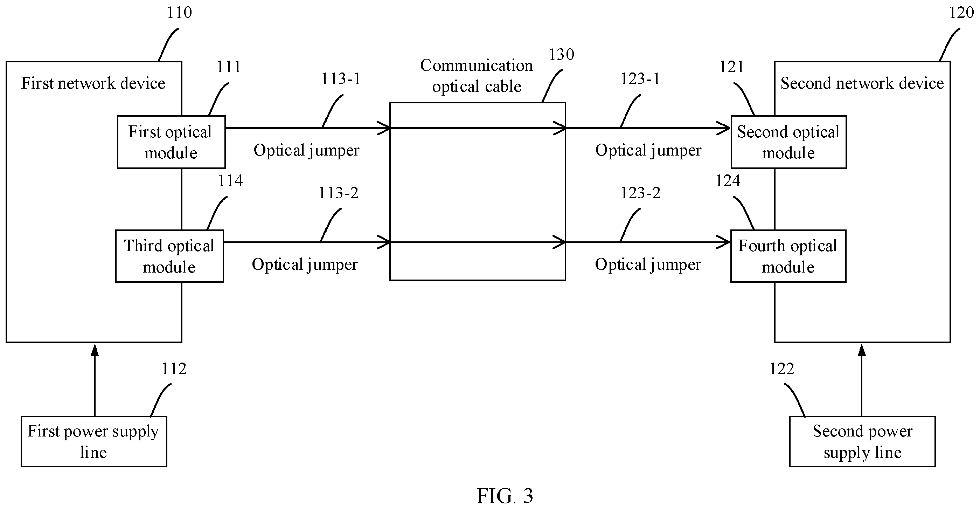

FIG. 3 is an example diagram of a structure of still another communication system. With reference to FIG. 3, the communication system shown in FIG. 3 includes but is not limited to a first network device 110, a second network device 120, a network management device 140, a communication optical cable 130, and the like. The first network device 110 includes but is not limited to a first optical module 111 and a third optical module 114. The second network device 120 includes but is not limited to a second optical module 121 and a fourth optical module 124. The power supply line includes but is not limited to a first power supply line 112 and a second power supply line 122.

The first network device 110 exchanges data with the second network device 120 through an optical jumper and the communication optical cable 130. An optical communication link between the first optical module 111 and the second optical module 121 includes an optical jumper 113-1 and an optical jumper 123-1. In addition, an optical communication link between the third optical module 114 and the fourth optical module 124 includes an optical jumper 113-2 and an optical jumper 123-2.

An optical signal transmission path in the communication system shown in FIG. 3 may be: The first optical module 111 in the first network device 110 outputs an optical signal; the optical signal is input to the communication optical cable 130 through the first optical jumper 113-1; and the optical signal output by the communication optical cable 130 is input to the second optical module 121 of the second network device 120 through the second optical jumper 123-1. In this way, optical signal transmission between the first optical module 111 and the second optical module 121 is implemented.

The third optical module 114 in the first network device 110 outputs an optical signal, and the optical signal is input into the communication optical cable 130 through the first optical jumper 113-2, and the optical signal output by the communication optical cable 130 is input to the fourth optical module 124 of the second network device 120 through the second optical jumper 123-2. In this way, optical signal transmission between the third optical module 114 and the fourth optical module 124 is implemented.

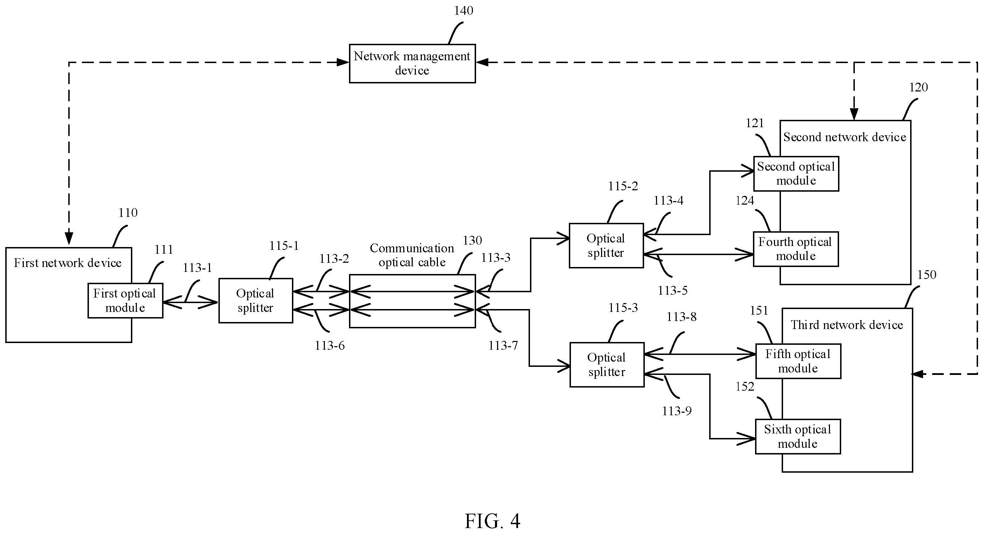

FIG. 4 is an example diagram of a structure of still another communication system. Refer to FIG. 4. The communication system shown in FIG. 4 includes but is not limited to a first network device 110, a second network device 120, a third network device 150, a network management device 140, a communication optical cable 130, and an optical splitter 115 (including an optical splitter 115-1, an optical splitter 115-2, and an optical splitter 115-3). The first network device 110 includes but is not limited to a first optical module 111. The second network device 120 includes but is not limited to a second optical module 121 and a fourth optical module 124. The third network device includes but is not limited to a fifth optical module 151 and a sixth optical module 152. The system further includes a power supply line (not shown in the figure). The optical splitter can split one channel of optical signal into a plurality of channels of optical signals. The first network device may send an optical signal to two or more network devices and modules through one or more levels of optical splitters, that is, a P2MP (point-to-multipoint, point-to-multipoint) scenario.

Specifically, the first network device 110 exchanges data with the second network device 120 through an optical splitter, an optical jumper, and a communication optical cable 130.

An optical signal transmission path in the communication system shown in FIG. 4 may be: The first optical module 111 in the first network device 110 outputs an optical signal, and the optical signal is input to the communication optical cable 130 through the optical jumper 113-1. The optical signal output by the communication optical cable 130 is input to the optical splitter 115-1 through the optical jumper 113-1. The optical splitter 115-1 splits one channel of optical signal into two channels of optical signals. One channel of optical signal is input into the communication optical cable 130 through an optical jumper 113-2. The optical signal output by the communication optical cable 130 is input to the optical splitter 115-2 through 113-3. The optical splitter 115-2 splits the optical signal into two channels of optical signals for another time. One channel of optical signals is input to the second optical module 121 through a jumper 113-4. The other channel of optical signal is input to the fourth optical module 124 through a jumper 113-5.

Still refer to FIG. 4. The other channel of optical signal output by the optical splitter 115-1 is input into the communication optical cable 130 through an optical jumper 113-6. The optical signal output by the communication optical cable 130 is input to the optical splitter 115-3 through 113-7. The optical splitter 115-3 splits the optical signal into two channels of optical signals for another time. One channel of optical signals is input to the fifth optical module 151 through a jumper 113-8. The other channel of optical signal is input to the fifth optical module 152 through a jumper 113-9.

The network device in embodiments of this application may be an integrated device, or may be a pluggable board. One network device or a board of a network device may include one or more optical modules. Usually, these optical modules are inserted into a panel of a network device or a board as a pluggable independent module, or may be inside the network device or the board.

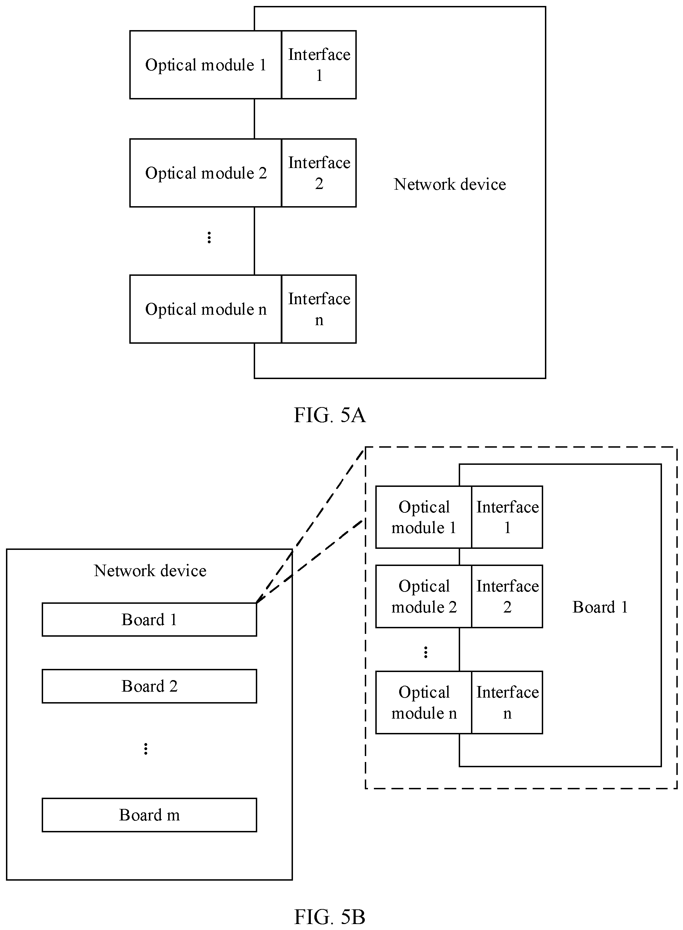

FIG. 5A is a diagram of a structure of a network device according to an embodiment of this application. With reference to FIG. 5A, in some embodiments of this application, the network device may include at least one optical module. For example, the network device may include an optical module 1, an optical module 2, ..., and an optical module n.

In an example, the network device may be an integrated device, and the optical module may be directly inserted into the network device as a pluggable independent module. For example, as shown in FIG. 5A, the optical module 1, the optical module 2, ..., and the optical module n may be inserted, in a pluggable manner, into corresponding ports on the network device.

Optionally, the optical module may also be disposed (or integrated) inside the network device.

A central processing unit (may also be referred to as a central processing module, which is not limited in this application) of the network device may exchange data with a module central processing unit (may also be referred to as a module central processing module, which is not limited in this application) in the optical module through a communication bus.

FIG. 5B is a diagram of another structure of a network device according to an embodiment of this application. With reference to FIG. 5B, in some other embodiments of this application, the network device may include but is not limited to at least one board. For example, the network device may include a board 1, a board 2, ..., and a board n that are independent of each other.

For example, the board is a pluggable board. Each board may be inserted into the network device, or the board may be disposed (or integrated) inside the network device. The central processing unit of the network device exchanges data with a board central processing unit in the board through a communication bus.

As shown in FIG. 5B, the board 1 is used as an example, and at least one optical module may be disposed in the board. The optical module may be inserted into the board in a pluggable manner, or the optical module may be disposed (integrated) inside the board. For example, in FIG. 5B, the optical module 1, the optical module 2, ..., and the optical module n may be inserted, in a pluggable manner, into corresponding ports on the board. The board central processing unit exchanges data with the module central processing unit in the optical module through the communication bus.

The optical module in this embodiment of this application may include but is not limited to a photoelectric conversion module, an optical signal processing module, an optical amplification module, an optical switching module, and the like. This is not limited in this application.

In an optical communication scenario (for example, any scenario shown in FIG. 1 to FIG. 3), an operator needs to maintain a connection relationship of an optical fiber link. An embodiment of a conventional technology provides a manner of maintaining the connection relationship of an optical fiber. Specifically, an optical line terminal on a network device OLT (Optical Line Terminal, optical line terminal) obtains identification information of a to-be-identified optical fiber that is connected to the optical line terminal, and the optical line terminal generates a data frame that includes the identification information of the to-be-identified optical fiber. The optical line terminal transmits an optical signal generated by data frames to the to-be-identified optical fiber. An optical fiber identifier is connected to a corresponding optical fiber, parses and identifies a data frame signal, and completes, at a peer end of the optical fiber, identification and labeling of the to-be-identified optical fiber. Construction or maintenance personnel carry the optical fiber identifier. In a process of construction, service provisioning, and related maintenance of an optical network, the OLT may collect and obtain identification information of each to-be-identified optical fiber through a network element management system or periodic startup, encode the identification information of each to-be-identified optical fiber, convert the identification information into an optical signal, and transmit the optical signal to the to-be-identified optical fiber connected to an OLT port. A detection operator at a remote end receives an optical signal on each optical fiber at a remote end (for example, a user side) via the optical fiber identifier, and determines whether information carried in the optical signal of each optical fiber is the identification information of the to-be-identified optical fiber, to identify and label one of a plurality of optical fibers at the remote end as the to-be-identified optical fiber. This helps perform subsequent work such as detection and evaluation on link quality and splicing quality on the optical fiber.

In this manner, the construction or maintenance personnel need to connect the optical fiber identifier to each to-be-identified optical fiber at the remote end, and complete signal parsing to restore the identification information of the to-be-identified optical fiber. For a scenario in which both a source end and a destination end have been interconnected to a device, optical fiber identification can be performed only after a pigtail at one end is unplugged and connected to the optical fiber identifier. That is, an original interconnection status of the to-be-identified optical fiber needs to be interrupted during a test. For optical fiber identification that can be performed only on a premise that a service needs to be interrupted on an optical fiber link on which a communication service is running, a requirement that the service cannot be interrupted in an actual operation and maintenance scenario cannot be met. In addition, for an optical splitter scenario of an OLT network, this solution is only applicable to identification of a link at a terminating end. If a measurement is performed on a front-end port of the optical splitter, a corresponding patch cord needs to be unplugged, which interrupts communication on all subsequent lines of this level of optical splitter.

An embodiment of this application provides a detection system. The system includes but is not limited to an optical communication network (may also be referred to as an optical communication system) and a detection instrument (may also be referred to as an identification instrument or a link identification instrument, which is not limited in this application). Optionally, the optical communication network may be of any system architecture in FIG. 1 to FIG. 4, or may be of another optical communication architecture in another embodiment. This is not limited in this application. In the detection system provided in this embodiment of this application, a first network device (is used as an optical signal transmitting end, and may be a network device or an optical module in a network device, which is referred to as a transmitting end for short) in the optical communication network sends an optical signal. The optical signal includes a service optical signal and a pilot tone optical signal (may also be referred to as a detection optical signal, which is not limited in this application). The pilot tone optical signal includes link information. The link information is used to describe a topology of the optical communication network and/or a communication status of the optical communication network, and includes but is not limited to, for example, network device information and/or path routing information. The detection instrument is disposed on an optical communication link (that is, a single optical fiber), and obtains, on the optical communication link through detecting light leakage caused by macro-bending of the optical fiber, an optical signal transmitted in a to-be-detected optical fiber. The detection instrument may process the optical signal to obtain link information carried in the pilot tone optical signal. In this way, in the detection system in this embodiment of this application, the transmitting end is used to send the optical signal including the link information, so that the detection instrument can obtain the optical signal transmitted in the to-be-detected optical fiber, and obtains the link information through parsing without disconnecting the optical communication link. That is, topology information and/or status information of the optical communication network can be obtained when normal service transmission is kept. An operator may improve a topology of the optical communication network based on the link information, and may further obtain the communication status of the optical communication network, to analyze a health status of the optical communication network.

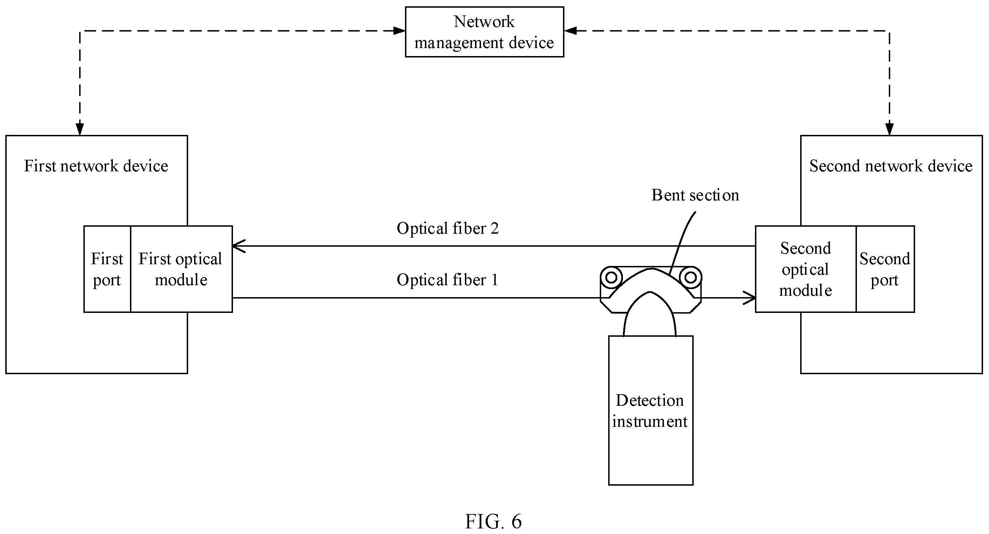

FIG. 6 is an example diagram of an architecture of the detection system. The system includes but is not limited to an optical communication network and a detection instrument. The optical communication network shown in FIG. 6 is merely an example, and may be of any optical communication network architecture. This is not limited in this application. With reference to FIG. 6, the optical communication network includes but is not limited to a first network device, a second network device, a network management device, and an optical communication link. A first optical module is inserted into a first port of the first network device, and a second optical module is inserted into a second port of the second network device. The first optical module exchanges data with the second optical module through an optical fiber 1 and an optical fiber 2. The detection instrument is disposed on a to-be-detected optical fiber, that is, the detection instrument is in contact with an exterior of the to-be-detected optical fiber, without interrupting a working status of the optical communication link. In this example, an example in which the to-be-detected optical fiber is the optical fiber 1 is used. In a working period of the network device, that is, in a process in which the first network device exchanges service data with the second network device, the detection and identification instrument may be clamped on the to-be-detected optical fiber, so that a contact portion between the optical fiber and the detection and identification instrument is curved, and the detection and identification instrument may obtain, through macro-bending detection, an optical signal coupled out from the to-be-detected optical fiber. A structure of the detection and identification instrument shown in FIG. 6 is merely an example for description. This is not limited in this application. In addition, in this embodiment of this application, only an example in which the detection and identification instrument is clamped on the optical fiber to obtain the optical signal coupled out from the optical fiber is used for description. In another embodiment, the detection and identification instrument may be disposed on the optical fiber in another manner, to obtain an optical signal transmitted in the optical fiber. Further, in this embodiment of this application, only an example in which the macro-bending detection manner is used, that is, the detection and identification instrument obtains the optical signal coupled out from the optical fiber through a bent section of the optical fiber is used for description. In another embodiment, the optical signal transmitted in the optical fiber may be obtained in another manner that does not interrupt optical signal transmission. This is not limited in this application.

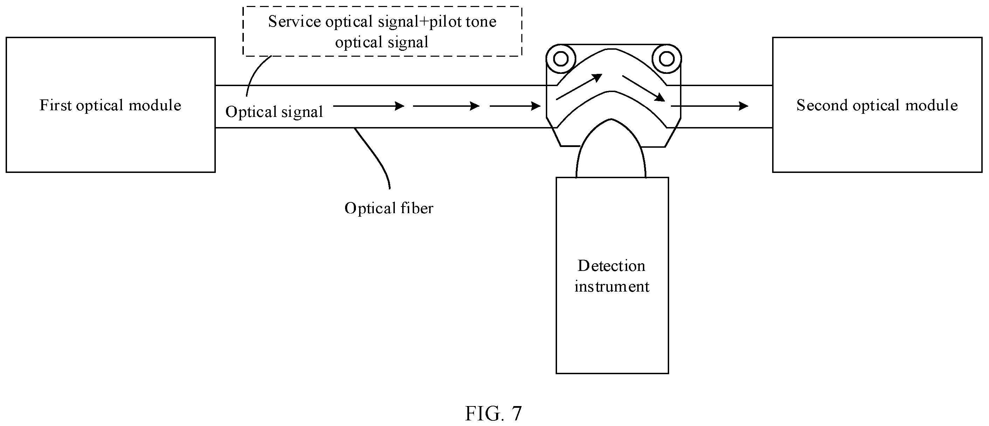

With reference to FIG. 6, FIG. 7 is an example diagram of a working procedure of the detection system. With reference to FIG. 7, the first optical module outputs an optical signal. The optical signal includes a service optical signal and a pilot tone optical signal. The service optical signal includes service information. The pilot tone optical signal includes link information (may also be referred to as pilot tone information). The link information is used to describe a topology of the optical communication network and/or the communication status of the optical communication network. Specifically, the first optical module may obtain the link information delivered by a network device side. The link information includes but is not limited to any one or a combination of the following: subrack numbers and port numbers of devices at both ends, an optical module model, a transmission distance, a code pattern, wavelength information, transmitting optical power, transmitting-end alarm information, and path routing information. The first optical module encodes the link information to obtain encoded link information, which may also be referred to as the pilot tone information. The encoded link information is a data frame having a specific format, and the specific format is described below. The first optical module superimposes, by using a pilot tone technology, a pilot tone optical signal that includes the pilot tone information to a service data optical signal, to generate an optical signal (may also be referred to as a target optical signal). The pilot tone optical signal has a specified pilot tone depth (may also be referred to as a modulation depth, which is not limited in this application) and a specified pilot tone frequency (may also be referred to as a modulation frequency, which is not limited in this application).

For example, the detection instrument is clamped on the optical fiber, and obtains, through macro-bending detection, the optical signal transmitted in the optical fiber. The detection instrument performs parsing (may also be referred to as demodulation or restoration, which is not limited in this application) on the optical signal, to obtain the link information. Optionally, the detection instrument may be connected to a display, and display the obtained link information in real time via the display. Optionally, the detection instrument transmits the link information to another terminal through a transmission interface (usually is Wi-Fi, USB, Bluetooth, Ethernet, or the like, which is not limited in this application).

For example, the second optical module receives the optical signal, performs parsing (may also be referred to as demodulation or restoration, which is not limited in this application) on the optical signal, and obtains the service information and the link information.

The following separately describes in detail the technical solutions on first network device, detection instrument, and second network device sides.

### 1. First network device side:

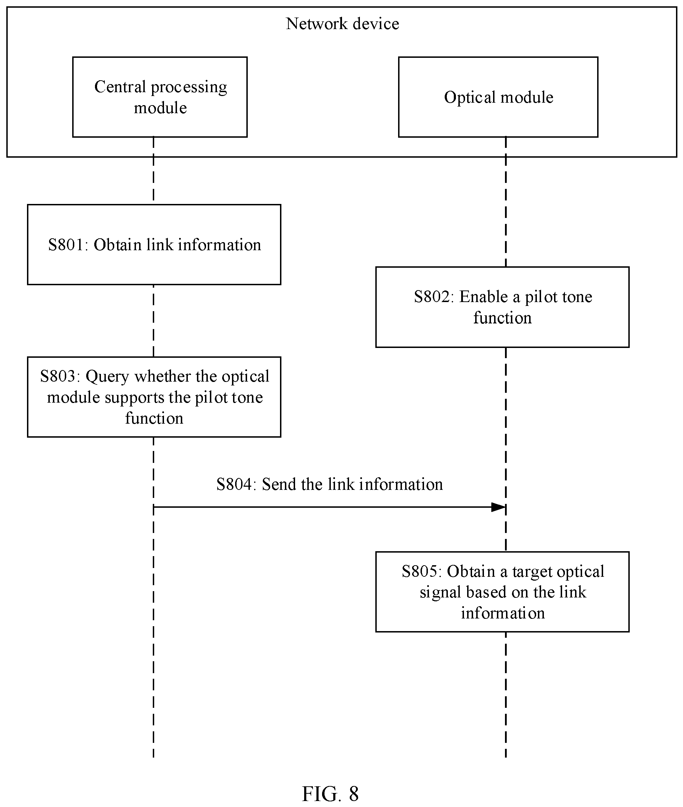

FIG. 8 is an example diagram of a processing procedure on the first network device side. With reference to FIG. 8, the processing procedure specifically includes but is not limited to the following steps.

S801: A central processing module of a network device obtains link information.

For example, an operator may configure the link information in a network management device. The link information includes but is not limited to at least one of the following: device information of a first network device, device information of a second network device, path routing information, and other extension information.

The device information of the first network device includes but is not limited to identification information, port identification information, extension information, and the like of the first network device.

The device information of the second network device includes but is not limited to identification information, port identification information, extension information, and the like of the second network device.

The path routing information includes but is not limited to identification information of an intermediate device that an optical communication link passes through.

For example, the identification information of the first network device includes but is not limited to at least one of the following: a data transmission direction, a site name, and a network device identifier (may also be understood as a subrack identifier).

The port identification information includes but is not limited to board identification information (optional) and a port ID.

The device information and the port identification information of the second network device are the same as those of the first network device. Details are not described herein again.

For example, the extension information includes but is not limited to at least one of the following: an optical module model, a transmission distance, a code pattern, wavelength information, transmitting optical power, alarm information, and the like.

For example, the device information of the first network device is used as an example. The first network device is located in Guangzhou, and the second network device is located in Beijing. Correspondingly, the identification information of the first network device includes but is not limited to at least one of the following:

Guangzhou to Beijing (data transmission direction), Qinghe district in Guangzhou (site), subrack 1507-0 (network device ID, namely, subrack identifier), 19-U3SN402 (board identifier), and 1 (port ID) Optionally, "subrack" in this embodiment of this application may also be referred to as a support or another name. This is not limited in this application.

The identification information indicates that the transmission direction of the optical signal is from Guangzhou to Beijing, and the port 1 (may also be referred to as a port 1 or a first port) on the board 19-U3SN402 in the network device in the subrack 1507-0 at the site in Qinghe district in Guangzhou.

In this embodiment of this application, the intermediate device that the optical communication link passes through may be an active device, or may be a passive device. For example, the intermediate device may be the passive device such as an optical fiber distribution frame or an optical fiber distribution box, or may be the active device such as an optical switching device or an optical amplification device. This is not limited in this application.

For example, identification information of the intermediate device includes but is not limited to a site name, an intermediate device identifier (may be a board identifier), and a port identifier.

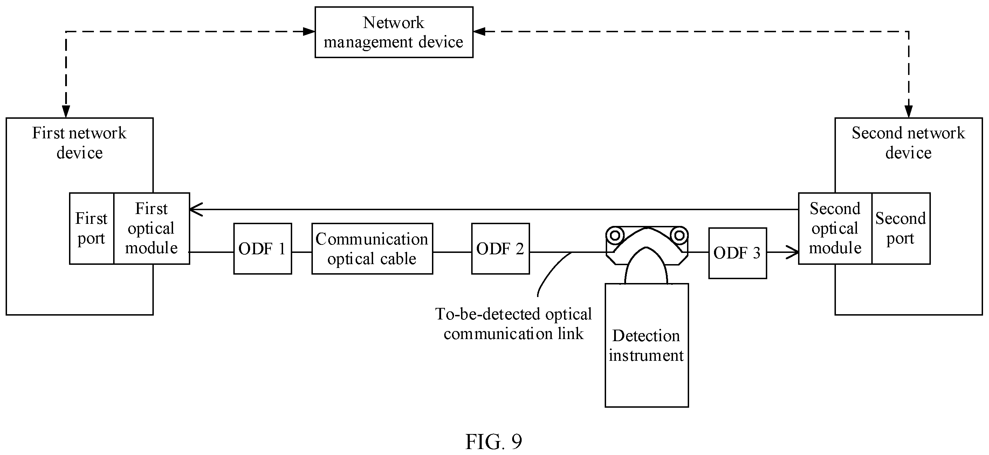

For example, FIG. 9 is an example diagram of an application scenario. With reference to FIG. 9, a system includes but is not limited to an optical communication network and a detection instrument. In this example, the optical communication network includes but is not limited to the first network device, the second network device, the optical communication link, the network management device, and the like. The optical communication link includes a first optical communication link on which the first optical module transmits a signal to the second optical module, and a second optical communication link on which the second optical module transmits a signal to the first optical module. In this scenario, an example in which the first optical communication link is the to-be-detected optical fiber is used for description. The first optical communication link includes the first optical module, an ODF 1, a communication optical cable, an ODF 2, an ODF 3, the second optical module, and an optical fiber that connects each device or apparatus. The detection instrument is clamped on an optical fiber between the ODF 2 and the ODF 3, and a position at which the detection instrument is clamped may be referred to as a detection point (may also be referred to as a test point, a monitoring point, an identification point, or the like). This is not limited in this application. The position of the detection point is merely an example. This is not limited in this application. In this example, path routing information of the first optical communication link may include but is not limited to a site name of the ODF 1, an identifier of the ODF 1 (may be, for example, a subrack identifier of the ODF 1), and a port identifier of the ODF 1 (that is, an identifier of a port through which the first optical communication link is connected to the ODF 1); a site name of the ODF 2, an identifier of the ODF 2 (may be, for example, a subrack identifier of the ODF 2), and a port identifier of the ODF 2 (that is, an identifier of a port through which the first optical communication link is connected to the ODF 2); a site name of the ODF 3, an identifier of the ODF 3 (may be, for example, a subrack identifier of the ODF 3), and a port identifier of the ODF 3 (that is, an identifier of a port through which the first optical communication link is connected to the ODF 3); and a site name of an ODF 4, an identifier of the ODF 4 (may be, for example, a subrack identifier of the ODF 4), and a port identifier of the ODF 4 (that is, an identifier of a port through which the first optical communication link is connected to the ODF 4). In this embodiment of this application, only the path routing information of the first optical communication link in FIG. 9 is used as an example for description. In another embodiment, path routing information of different optical communication links may be configured based on an actual requirement. This is not limited in this application.

For example, the network device obtains the link information configured by the network management device. In an example, the network device may periodically obtain link information at a local end from the network management device. Optionally, the link information at the local end is link information corresponding to a communication link connected to each port in a local device. In another example, after each network device goes online, the network management device may send link information corresponding to the network device to the network device; and after an update of the link information of the network device is detected, sends updated link information to the network device. A specific obtaining manner may be configured based on an actual requirement. This is not limited in this application.

S802: Enable a pilot tone function of an optical module.

For example, the optical module may be provided with a pilot tone function switch. The operator may enable the pilot tone function of the optical module by controlling the pilot tone function switch. In an example, after the pilot tone function is enabled, the optical module performs a subsequent monitoring procedure, that is, sends an optical signal that includes the pilot tone optical signal. In another example, after the pilot tone function is disabled, the optical module stops sending an optical signal that includes the pilot tone optical signal. In a test process, the pilot tone function of each optical module may keep in an enabled state, that is, each module serving as the transmitting end generates and sends an optical signal that includes link information. Correspondingly, each optical communication link transmits the optical signal that includes link information. The operator can adjust the position of the detection instrument to detect a corresponding optical fiber. For example, in a process in which the first optical module continuously sends the optical signal that includes the pilot tone optical signal, the operator may clamp the detection and identification instrument at a position shown in FIG. 9, to obtain the link information, and the operator may identify an optical fiber based on the link information. For another example, in a process in which the first optical module continuously sends the optical signal that includes the pilot tone optical signal, the operator may move the detection and identification instrument. For example, move the instrument from a position in FIG. 9 to any position between the OFD 1 and the communication optical cable, and clamp the detection and identification instrument on the optical fiber, to obtain an optical signal transmitted on the light (that is, the to-be-detected optical fiber) on which the detection and identification instrument is clamped and further obtain the link information. In other words, in this embodiment of this application, in a process in which the optical module continuously sends the optical signal that includes the pilot tone optical signal, it may also be understood that when the optical signal that includes the pilot tone optical signal is continuously transmitted in the optical fiber, the operator may dispose the detection and identification instrument at any position of the optical fiber, to obtain the optical signal and further obtain the link information. For example, it is assumed that the first optical module is connected to an optical fiber 1, and the optical fiber 1 is connected to the second optical module. The first optical module sends the optical signal that includes the pilot tone optical signal. To detect whether a connection port of the second optical module is correct, the operator may clamp the detection and identification instrument on the optical fiber connected to the second optical module. The detection and identification instrument may obtain the optical signal, and obtain link information through parsing. The operator may determine, based on the link information, whether the optical fiber is correctly connected, and may further determine whether a label on the optical fiber is correct. FIG. 9 is merely an example diagram of a structure. In an actual application scenario, there are a large quantity of optical fibers in the optical communication system. The operator may clamp the detection and identification instrument on specified light to obtain link information, to determine a connection of the optical fiber, a label of the optical fiber, and the like based on the link information.

Optionally, in the test process, the operator may also enable the pilot tone function of modules connected to the to-be-detected optical communication link one by one, to avoid occupying too many network resources.

For example, the pilot tone function of the optical module may be enabled or disabled at any time, which may be set based on an actual requirement. This is not limited in this application.

It should be noted that S802 and other steps in FIG. 8 are not time-limited, and may be performed at any moment. This is not limited in this application.

S803: A central processing module of the network device queries whether the optical module supports the pilot tone function.

For example, after obtaining the link information, the network device may detect whether each optical module supports the pilot tone function. In this embodiment of this application, supporting the pilot tone function does not mean that the pilot tone function is enabled. Supporting the pilot tone function means that the optical module has a capability of generating and outputting an optical signal that includes link information, or may be understood as having a capability of performing pilot tone on a service signal by using the pilot tone technology. Optionally, after the pilot tone function is disabled, an optical module that supports the pilot tone function may still obtain link information corresponding to the optical module.

S804: The central processing module of the network device outputs the link information to the optical module.

For example, the network device sends, to the optical module that supports the pilot tone function, the link information corresponding to the optical module. Optionally, the network device obtains link information of a module that is used as the transmitting end. For example, in FIG. 6, the first network device obtains link information of the first optical module. The link information indicates link information of an optical communication link (for example, the optical fiber 1) on which the first optical module transmits an optical signal to the second optical module. The second network device obtains link information of the second optical module. The link information indicates link information of an optical communication link (for example, the optical fiber 2) on which the second optical module transmits an optical signal to the first optical module.

In this embodiment of this application, the network device may include a plurality of ports, and each port corresponds to one optical module. The network device may obtain link information corresponding to each optical module, which may also be understood as link information corresponding to each port. The network device may send, based on obtained link information, link information that corresponds to a port to a module that corresponds to the port.

S805: The optical module outputs an optical signal based on the link information.

For example, after obtaining the link information and detecting that the pilot tone function is enabled, the optical module may generate, based on the link information, the target optical signal that includes the service optical signal and the pilot tone optical signal. Specifically, the optical module encodes the link information to obtain encoded link information, which may also be referred to as pilot tone information.

The optical module may generate the target optical signal based on the pilot tone information. In an example, the optical module may generate a pilot tone signal based on the pilot tone information. The optical module generates a target electrical signal based on the pilot tone signal and a service signal. Then, electrical-to-optical conversion is performed on the target electrical signal to obtain the target optical signal. In other words, in this example, the optical module processes a service electrical signal, so that the target electrical signal carries the service information and the pilot tone information, and then converts the target electrical signal into an optical signal. In another example, the optical module may generate a pilot tone signal based on the pilot tone information. The optical module may process the service optical signal based on the pilot tone signal, to obtain the target optical signal. In other words, in this example, the optical module processes the service optical signal, so that the target optical signal carries the service information and the pilot tone information.

For example, the optical module outputs the optical signal via the optical communication link. For example, in FIG. 9, the first optical module sends the optical signal to the second optical module via the optical communication link.

The following describes in detail a processing procedure of generating an optical signal by an optical module.

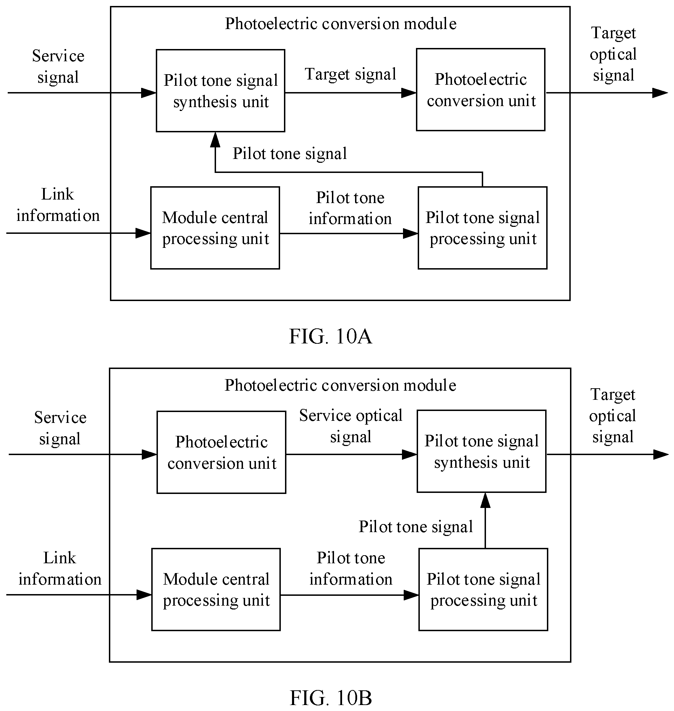

FIG. 10A is an example diagram of a structure of a photoelectric conversion module. With reference to FIG. 10A, the photoelectric conversion module includes but is not limited to a pilot tone signal synthesis unit, a photoelectric conversion unit, a module central processing unit, a pilot tone signal processing unit, and the like.

The module central processing unit is configured to obtain link information and encode the link information, to obtain pilot tone information.

The pilot tone signal processing unit is configured to generate a pilot tone signal based on the pilot tone information.

The pilot tone signal synthesis unit is configured to generate a target electrical signal based on the pilot tone signal and a service signal. Specifically, the pilot tone signal synthesis unit superimposes the pilot tone signal to the service signal, and outputs the target electrical signal that includes the service signal and the pilot tone signal.

The photoelectric conversion unit is configured to: perform electrical-to-optical conversion on the target electrical signal, and output a target optical signal.

It should be noted that in this embodiment of this application, the service signal (may also be referred to as a service electrical signal), the pilot tone signal (may also be referred to as a pilot tone electrical signal), and the target electrical signal are all electrical signals, and the service optical signal, the pilot tone optical signal, and the target optical signal are all optical signals. Details are not described below again.

It should be further noted that names of modules in FIG. 10A are merely examples. This is not limited in this application.

It should be further noted that the optical module may further include more modules, for example, a module configured to perform processing like shaping and amplification on the service signal, such as a signal processing module. This is not limited in this application.

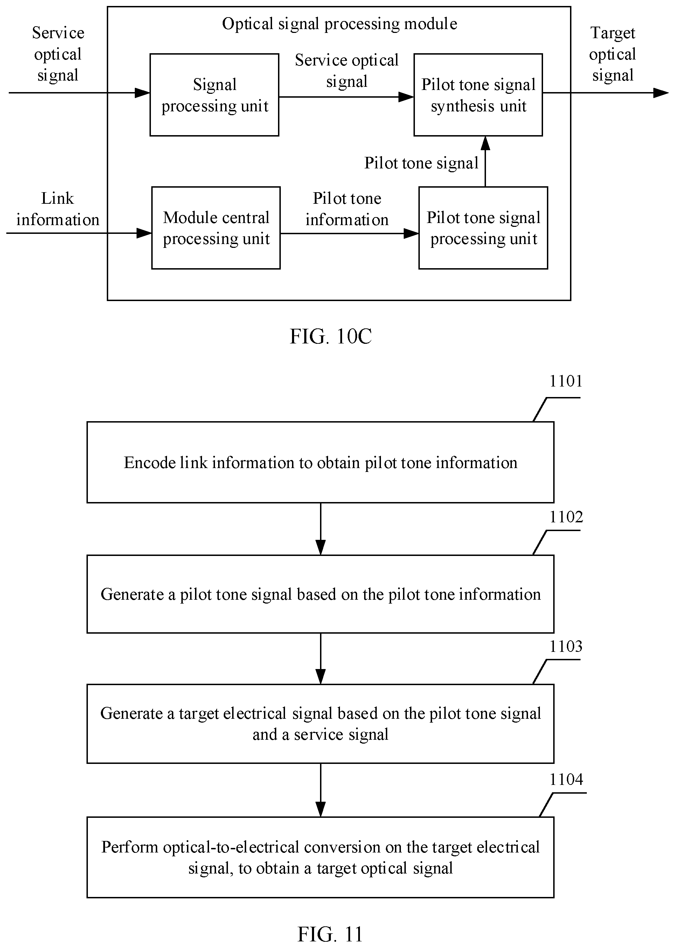

With reference to FIG. 10A, FIG. 11 is an example diagram of a signal processing procedure. With reference to FIG. 11, the processing procedure specifically includes but is not limited to the following steps.

S1101: Encode link information to obtain pilot tone information.

For example, through the communication bus, a module central processing unit obtains link information, corresponding to the port, input by the central processing module of the network device. Optionally, the module central processing unit may configure a register that is configured to store link information (may be link information delivered by the network management device, or may be link information obtained by a local end through parsing) and other parameters (for example, a modulation frequency and a modulation depth described below).

The module central processing unit encodes the pilot tone signal to obtain encoded link information. In this embodiment of this application, the encoded link information is referred to as the pilot tone information. Details are not described below. Specifically, the module central processing unit encodes the pilot tone signal in a preset coding manner, to obtain the pilot tone information. In this embodiment of this application, the preset coding manner may be understood as a coding manner agreed on by modules in the system. In other words, the transmitting end (for example, the first optical module) performs coding in the preset coding manner, and the receiving end (for example, the detection instrument or the second optical module) may perform decoding in the preset coding manner, to obtain correct transmitted data.

Optionally, the preset coding manner may be any coding manner that avoids a length 0 or a length 1. The coding manner may be the same as or may be different from a coding manner of the service information. This is not limited in this application. For example, in this embodiment of this application, the preset coding manner may be Manchester coding. The coding manner is merely an example, and is not limited in this application.

Optionally, the module central processing unit translates the pilot tone information into corresponding hexadecimal information by using an ASCII (American Standard Code for Information Interchange, American Standard Code for Information Interchange) code.

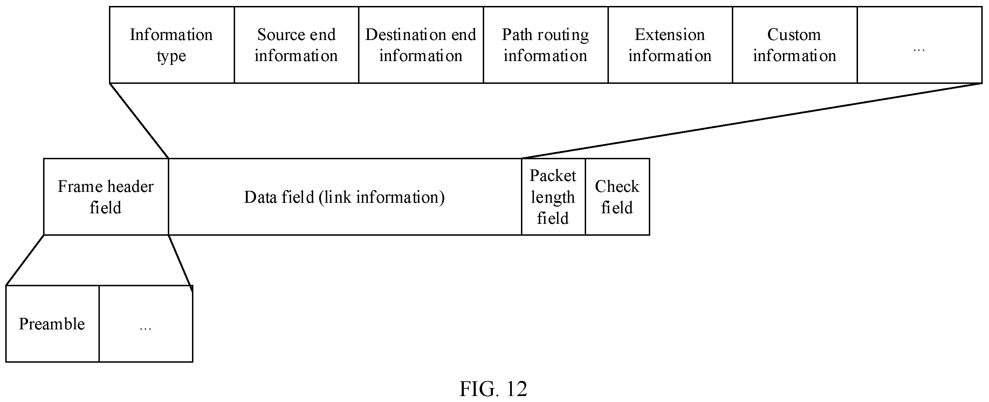

FIG. 12 is an example diagram of a data frame format of the pilot tone information. With reference to FIG. 12, a data frame includes but is not limited to a frame header field and a data field. The frame header field carries a preamble, and the data field carries link information and other information.

For example, the preamble is a specific preamble, or may be understood as a pre-agreed preamble. That is, the source end (that is, the optical signal transmitting end, for example, the first optical module) and the destination end (that is, the optical signal receiving end, for example, the second optical module) are preset (or agreed on). After encoding the link information, the source end generates the data frame, and the data frame includes the agreed preamble. In this way, after obtaining the data frame, the receiving end may obtain, by identifying the preamble, link information carried in the data frame. A specific obtaining manner is described below.

Optionally, in this embodiment of this application, the preamble may be one-byte 0x55 or two-byte 0x55+0xd5. This may be set based on an actual requirement, and is not limited in this application.

For example, the data field is used to carry the link information and other information. Optionally, the data field includes but is not limited to at least one of the following: an information type field, a source end information field, a destination end information field, a path routing information field, an extension information field, a custom information field, and the like.

The information type field is used to carry an information type. Optionally, a length of the information type field is one byte, and different bits indicate whether corresponding information exists in the data field. An example is listed for description.

**Table 1**

| Information type | Bit (bit) | Definition |
|---|---|---|
| Source end information | Bit 0 | A value 1 indicates that information contains the source end information, and a value 0 indicates that the information does not contain the source end information. |
| Destination end information | Bit 1 | A value 1 indicates that information contains the destination end information, and a value 0 indicates that the information does not contain the destination end information. |
| Path routing information | Bit 2 | A value 1 indicates that information contains the path routing information, and a value 0 indicates that the information does not contain the path routing information. |
| Extension information | Bit 3 | A value 1 indicates that information contains the extension information, and a value 0 indicates that the information does not contain the extension information. |
| Custom information | Bit 4 | A value 1 indicates that information contains the custom information, and a value 0 indicates that the information does not contain the custom information. |
| Reserved for extension | Bits 5 to 7 | Reserved bits |

With reference to Table 1, the bit 0 indicates whether the data field includes the source end information; the bit 1 indicates whether the data field includes the destination end information; the bit 2 indicates whether the data field includes the path routing information; the bit 3 indicates whether the data field includes the extension information; the bit 4 indicates whether the data field includes the custom information; and the bits 5 to 7 are reserved bits.

In this embodiment of this application, a sequence of fields in the data field is described by using an example of the information type field, the source end information field, the destination end information field, the path routing information field, the extension information field, and the custom information field. In another embodiment, the sequence of the fields in the data field may alternatively be set based on an actual requirement. Correspondingly, the information indicated by the bits in the information type is also correspondingly set.

Still with reference to FIG. 12, the source end information field is used to carry the source end information (for example, the device information of the first network device); the destination end information field is used to carry the destination end information (for example, the device information of the second network device); the path routing information field is used to carry the path routing information; the extension information field is used to carry the extension information; and the custom information field is used to carry the custom information.

In this embodiment of this application, each field may include marking information that is used to mark a type of information carried in the field. The marking information in this embodiment of this application includes From, To, Via, Ex, CM, and the like. From is used to mark information carried in a field as the source end information; To is used to mark information carried in a field as the destination end information; Via is used to mark information carried in a field as the path routing information; Ex is used to mark information carried in a field as the extension information; and CM is used to mark information carried in a field as the custom information. A marking manner is merely an example, and may be set based on an actual requirement. This is not limited in this application.

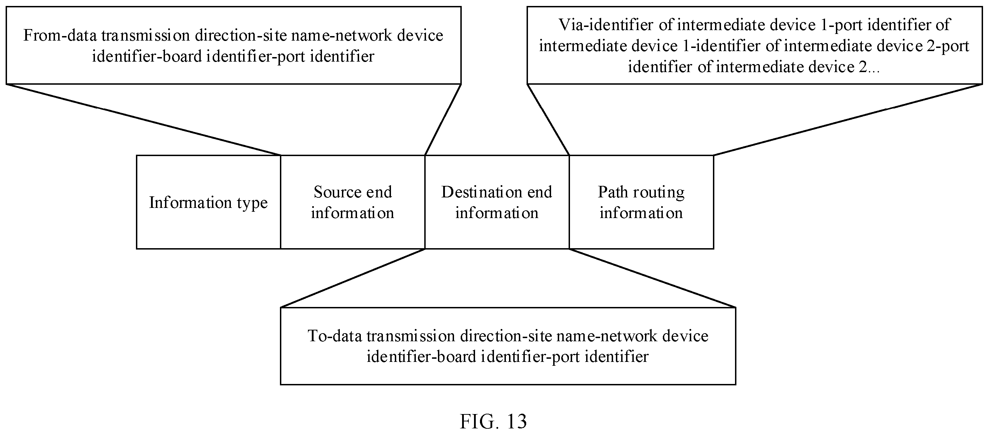

For example, with reference to FIG. 13, the source end information field carries the source end information, for example, the device information of the first network device, including but not limited to: From-data transmission direction-site name-network device identifier-board identifier-port identifier;
the destination end information field carries the destination end information, for example, the device information of the second network device, including but not limited to: To-data transmission direction-site name-network device identifier-board identifier-port identifier; and
the path routing information field carries the path routing information, including but not limited to: Via-identifier of intermediate device 1-port identifier of intermediate device 1-port identifier of intermediate device 2-identifier of intermediate device 2... Optionally, if the optical communication link does not pass through any intermediate device, the data frame may not include the field, or content of the field is empty.

"-" represents a separator, and is used to separate different information. Alternatively, another separation manner may be used. This is not limited in this application. For specific meanings of the identifiers, refer to the foregoing descriptions. Details are not described herein again.

For example, the to-be-detected optical communication link in FIG. 9 is used as an example. The source end information field includes: From-Guangzhou to Beijing (data transmission direction), Qinghe district in Guangzhou (site), subrack 1507-0 (network device ID, namely, subrack identifier), 19-U3SN402 (board identifier), and 1 (port ID); the destination end information field includes: To-Guangzhou to Beijing (data transmission direction)-Santai in Beijing (site)-subrack 1350-0 (network device ID, namely, subrack identifier)-52-U3SN402 (board identifier)-1 (port ID); and the path routing information field includes: Via-Shaoguan (site name of ODF 1)-ODF 1 (identifier of ODF 1)-15 (port identifier)-Chenzhou (site name of ODF 2)-ODF 2 (identifier of ODF 2)-1 (port identifier)-Eastern Changsha district (site name of ODF 3)-ODF 3 (identifier of ODF 3)-3 (port identifier)-Zhengzhou high-tech zone (site name of ODF 4)-ODF 4 (identifier of ODF 4)-4 (port identifier).

For example, the extension information carried in the extension information field is optionally extension information corresponding to the source end (namely, the optical signal transmitting end, for example, the first optical module), and for example, may include but is not limited to an optical module model, a transmission distance, a code pattern, wavelength information, transmitting optical power, and an alarm.

For example, the extension information in the extension information field may be EX-OM7560 (optical module model)-DQPSK (optical signal code pattern)-1500 km (transmission distance)-2 dBm (transmitting optical power).

Optionally, the extension information in this embodiment of this application may alternatively include source end extension information and destination end extension information. Extension information of each end may alternatively be included in a corresponding device information field. For example, the source end extension information may be included in the source end information field, and the destination end extension information may be included in the destination end information field. This is not limited in this application.

For example, the custom information carried in the custom information field may be set by a user at the transmitting end, and may be used to transfer maintenance information, for example, a change in routing information and feedback of operation information. For example, the custom information is CM-ODF 1 route change-new port-port 16, which indicates that an interface between the ODF 1 and the to-be-detected communication link is changed from an original port (for example, a port 15) to the port 16. Specific information may be set based on an actual requirement. This is not limited in this application.

Optionally, the data frame further includes a packet length field and a check field. The packet length field is used to carry packet length information, and the packet length information indicates a data frame length. The receiving end (for example, the second optical module or the detection instrument) may detect, based on the packet length information, whether a complete data frame is received. The check field is used to carry check information, and the check information is a cumulative checksum of the link information and the packet length information, and is used to detect whether the data frame is correctly received. Optionally, a CRC (Cyclic Redundancy Check, cyclic redundancy check) algorithm may be used for the check information. This is not limited in this application.

The module central processing unit outputs the pilot tone information to the pilot tone signal processing unit, to indicate the pilot tone signal processing unit to generate a corresponding pilot tone signal.

S1102: Generate a pilot tone signal based on the pilot tone information.

For example, as shown in FIG. 10A, the pilot tone signal processing unit obtains the pilot tone information, and processes the pilot tone information, to obtain the pilot tone signal. Specifically, the pilot tone signal processing unit modulates the pilot tone information to obtain the pilot tone signal having a preset modulation frequency (may also be referred to as a target modulation frequency). Optionally, the pilot tone frequency may also be indicated by the module central processing unit to the pilot tone signal processing unit. This is not limited in this application.

In this embodiment of this application, the pilot tone frequency may include but is not limited to 200 Hz, 1 kHz, 2 kHz, and the like. Different levels may be set based on an actual requirement. This is not limited in this application. For example, the modulation frequency in this embodiment of this application is 1 kHz. The value is merely an example, and is not limited in this application.

S1103: Generate a target electrical signal based on the pilot tone signal and the service signal.

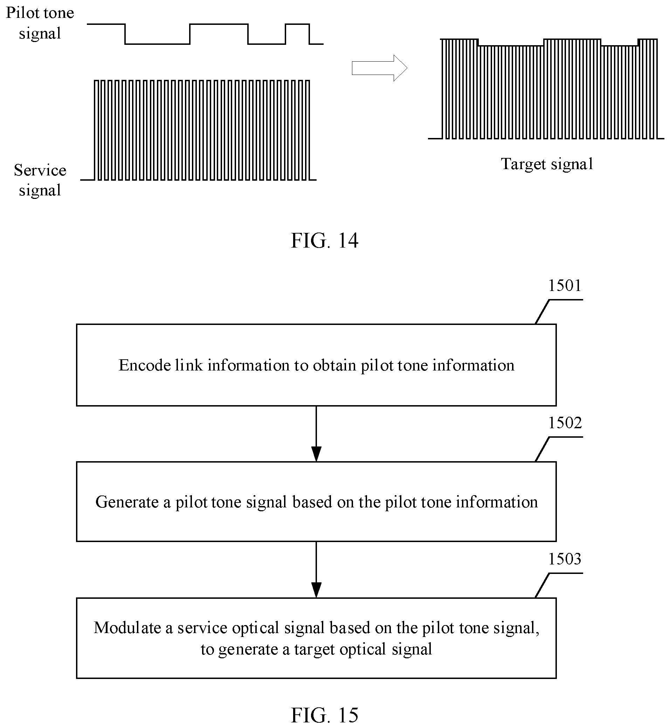

For example, as shown in FIG. 10A, the pilot tone signal processing unit outputs the pilot tone signal to the pilot tone signal synthesis unit. The pilot tone signal synthesis unit generates a target signal based on the pilot tone signal and the service signal, which may also be referred to as the target electrical signal. Specifically, the pilot tone signal synthesis unit superimposes a low-frequency pilot tone signal to a high-frequency service signal based on a preset pilot tone depth, and outputs the target signal. FIG. 14 is an example diagram of a pilot tone technology. With reference to FIG. 14, the pilot tone signal synthesis unit modulates an amplitude of the service signal based on the pilot tone signal, to superimpose a low-frequency signal to the high-frequency service signal. For example, NRZ code (Non-return-to-zero Code, non-return-to-zero code) modulation is used as an example. Before no service electrical signal is loaded, the photoelectric conversion unit outputs a direct current bias voltage (may be referred to as a direct current bias point), and in this case, the optical signal remains at a constant value. After a service electrical signal is generated, the photoelectric conversion unit uses a level 1 to represent a digit 1 and a level 0 to represent a digit 0. In this way, such a changing digital signal produces a changing voltage signal. After loading the changing voltage signal to the direct current bias voltage, the photoelectric conversion unit outputs a changing modulated voltage. The photoelectric conversion unit generates, on the constant optical signal, an optical signal that changes at a same frequency as the service electrical signal. Similarly, the pilot tone signal is loaded in a similar manner. A frequency of a modulation signal is lower than that of the service electrical signal, and a difference is large. Therefore, in a reference system of the modulation signal, it may be considered that the service electrical signal is a direct current bias point of the pilot tone signal. Similarly, the pilot tone signal (for example, is 101010...) is loaded to the direct current bias point, to superimpose the pilot tone electrical signal to the service electrical signal, and a low-frequency optical power change is finally produced on the output optical signal.

Optionally, the pilot tone depth may also be preset by the module central processing unit, and the module central processing unit may indicate the pilot tone depth to the pilot tone signal synthesis unit.

The pilot tone depth may also be referred to as a modulation depth or a modulation amplitude. The modulation depth represents a ratio of an amplitude of a low-frequency component modulated on direct current power of an original service signal (that is, the service electrical signal) to that of a direct current component. The modulation depth is further classified into an electrical modulation depth M_rf and an optical modulation depth M_op.

Electrical modulation depth M_rf: $M_rf = \frac{RF WT _ Vp}{RF Vp}$

In the foregoing formula:
M_rf: electrical modulation depth
RF WT_Vp: peak-to-peak value of an electrical modulation swing
RF Vp: average value of electrical modulation signals

Optical modulation depth M_op: $M_op = \frac{P _ wt}{P _ avg}$

In the foregoing formula:
M_op: optical modulation depth
P_wt: peak-to-peak value of an optical power modulation swing
P_avg: average value of optical power

In this embodiment of this application, the modulation depth is preset by an operator, for example, may be any depth value between 0.1% and 10%. For example, a value of the modulation depth affects a transmission distance and identification sensitivity. A larger value indicates a longer transmission distance but greater impact on an existing service signal. Correspondingly, the operator may set a corresponding pilot tone depth based on a transmission distance of the pilot tone signal, a value of output optical power, and a link budget. This is not limited in this application. For example, in this embodiment of this application, the pilot tone depth may be set to 8%. The value is merely an example, and is not limited in this application.

Optionally, in actual setting, a small modulation depth may be first used on the module, a test system is set up by using an optical power meter, an eye diagram meter, and a service instrument, and the modulation depth is gradually increased for testing. A proper modulation depth does not affect eye diagram quality under transmission specifications, and ensures service stability. In addition, link-related information can be restored from any optical fiber point within the transmission specifications by using a link identifier.

S1104: Perform optical-to-electrical conversion on the target electrical signal, to obtain the target optical signal.

Still with reference to FIG. 10A, for example, the pilot tone signal synthesis unit outputs the target signal to the photoelectric conversion unit. The photoelectric conversion unit performs electrical-to-optical conversion on the target signal, that is, converts an input electrical signal into an optical signal, to obtain the target optical signal. Correspondingly, the target optical signal includes the service optical signal and the pilot tone optical signal.

FIG. 10B is an example diagram of a structure of a photoelectric conversion module. With reference to FIG. 10B, the photoelectric conversion module includes but is not limited to a pilot tone signal synthesis unit, a photoelectric conversion unit, a module central processing unit, a pilot tone signal processing unit, and the like.

The module central processing unit is configured to obtain link information and encode the link information, to obtain pilot tone information.

The pilot tone signal processing unit is configured to generate a pilot tone signal based on the pilot tone information.

The photoelectric conversion unit is configured to convert a service signal (that is, a service electrical signal) into a service optical signal.

The pilot tone signal synthesis unit is configured to generate a target optical signal based on the pilot tone signal and the service optical signal. Specifically, the pilot tone signal synthesis unit modulates the service optical signal based on the pilot tone signal, to obtain the target optical signal.

With reference to FIG. 10A, FIG. 15 is an example diagram of a signal processing procedure. With reference to FIG. 15, the processing procedure specifically includes but is not limited to the following steps.

S1501: Encode link information to obtain pilot tone information.

For specific descriptions, refer to step S1101. Details are not described herein again.

S1502: Generate a pilot tone signal based on the pilot tone information.

For specific descriptions, refer to step S1102. Details are not described herein again.

S1503: Modulate a service optical signal based on the pilot tone signal, to generate a target optical signal.

Specifically, as shown in FIG. 10B, the pilot tone signal synthesis unit obtains the service optical signal input by the photoelectric conversion unit. The service optical signal carries service information. The pilot tone signal synthesis unit obtains the pilot tone signal input by the pilot tone signal processing unit. The pilot tone signal synthesis unit modulates the service optical signal based on the pilot tone signal, to output the target optical signal. Specifically, the pilot tone signal synthesis unit modulates the service optical signal based on the pilot tone electrical signal and a preset modulation depth, so that the pilot tone optical signal is loaded into the service optical signal.

FIG. 10C is an example diagram of a structure of an optical signal processing module. With reference to FIG. 10C, the optical signal processing module includes but is not limited to a pilot tone signal synthesis unit, a signal processing unit, a module central processing unit, a pilot tone signal processing unit, and the like.

The module central processing unit is configured to obtain link information and encode the link information, to obtain pilot tone information.

The pilot tone signal processing unit is configured to generate a pilot tone signal based on the pilot tone information.

The signal processing unit is configured to: perform processing (for example, amplification, shaping, or direction scheduling, which is not limited in this application) on a service optical signal, and output a processed service optical signal.

The pilot tone signal synthesis unit is configured to generate a target optical signal based on the pilot tone signal and the service optical signal. Specifically, the pilot tone signal synthesis unit modulates the service optical signal based on the pilot tone signal, to obtain the target optical signal. For a specific implementation, refer to the module descriptions in FIG. 10B. Details are not described herein again.

### 2. Detection instrument side:

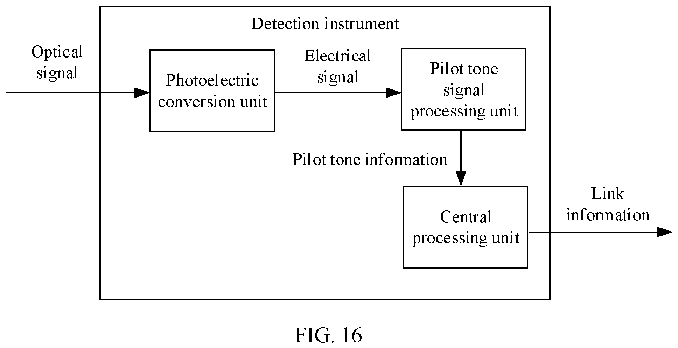

FIG. 16 is an example diagram of a structure of a detection instrument. With reference to FIG. 16, the instrument includes but is not limited to a photoelectric conversion unit, a pilot tone signal processing unit, and a central processing unit.

The photoelectric conversion unit is configured to perform optical-to-electrical conversion on an input optical signal, that is, convert the optical signal into an electrical signal.

The pilot tone signal processing unit is configured to extract, restore, and shape a pilot tone signal (that is, a pilot tone electrical signal).

The central processing unit is configured to obtain link information.

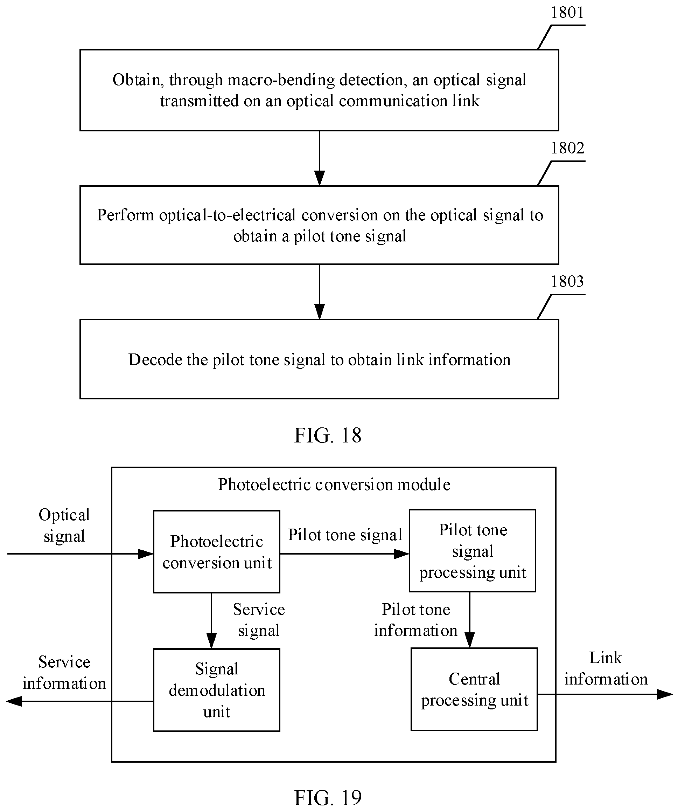

With reference to FIG. 16, FIG. 18 is an example diagram of a processing procedure on the detection instrument side. With reference to FIG. 18, the processing procedure specifically includes but is not limited to the following steps.

S1801: Obtain, through macro-bending detection, an optical signal transmitted on an optical communication link.

For example, as shown in FIG. 9, an operator may clamp the detection instrument at any position on a to-be-detected optical communication link. The position may be referred to as a to-be-detected point. For example, the optical signal is transmitted in the optical communication link, and the detection instrument may obtain, through macro-bending detection, a part of the optical signal transmitted in the optical communication link.

Optionally, for example, a magnitude of an optical signal coupled out from a to-be-detected optical fiber through macro-bending is related to a bending degree during clamping and a packaging material of the to-be-detected optical fiber. To reduce a measurement error, corresponding clamp sizes may be selected for optical fibers with different diameters, and a locking apparatus is disposed during clamping, so that a bending angle may be fixed. In this embodiment of this application, the operator may set clips with different bending radii based on different models of optical fibers in the market. The clips may be of a split type or an integrated type, and adapt to different models of optical fibers by adjusting different gears. Using a standard clip can ensure that the optical signal coupled out through macro-bending can be better obtained on a premise that the optical fiber is not damaged, and can reduce a test error to some extent.

S1802: Perform optical-to-electrical conversion on the optical signal to obtain a pilot tone signal.

For example, as shown in FIG. 16, the photoelectric conversion unit performs optical-to-electrical conversion on an input optical signal, that is, converts the optical signal into an electrical signal. In this embodiment of this application, if a received optical signal includes a service optical signal and a pilot tone optical signal, after the photoelectric conversion unit converts the optical signal, a service signal and the pilot tone signal are obtained. The photoelectric conversion unit may include a low-pass filter, which may filter the electrical signal obtained after conversion to filter out a high-frequency signal. As described above, a frequency of the service signal is far greater than a frequency of the pilot tone signal. Correspondingly, in a process in which the photoelectric conversion unit performs optical-to-electrical conversion on the optical signal, the service signal may be filtered out via the low-pass filter, and a low-frequency electrical signal output by the photoelectric conversion unit to the pilot tone signal processing unit is the pilot tone signal.

Certainly, the optical signal obtained by the detection instrument may either not include the pilot tone signal, and in some embodiments, may also include another low-frequency signal. Therefore, the low-frequency signal output by the photoelectric conversion module to the pilot tone signal processing unit may also be another signal. This is not limited in this application.

S1803: Decode the pilot tone signal to obtain link information.

Still with reference to FIG. 16, for example, the central processing unit indicates a first modulation frequency to the pilot tone signal processing unit. The pilot tone signal processing unit demodulates an obtained electrical signal (may be a low-frequency electrical signal that includes the pilot tone signal, or may be a low-frequency electrical signal that does not include the pilot tone signal) based on the first modulation frequency. Specifically, the pilot tone signal processing unit may demodulate the electrical signal based on the first modulation frequency, to obtain demodulated information (may also be referred to as a data frame).

The pilot tone signal processing unit outputs the demodulated information to the central processing unit. As described above, in an encoding phase, the pilot tone signal includes a preamble. Correspondingly, the central processing unit identifies whether the demodulated information (that is, the data frame) includes a specified preamble, for example, 0x55 or 0x55+0xd5.

In an example, if the specified preamble is included, it indicates that the electrical signal output by the photoelectric conversion module is the pilot tone signal, and correspondingly, information output by the pilot tone signal processing unit is pilot tone information. The central processing unit may decode the pilot tone information in a preset coding manner, to obtain corresponding link information, so that the link information in the data field shown in FIG. 12 can be obtained. Optionally, the central processing unit may detect the length of the data frame based on the packet length information in the packet length field, to detect whether a complete data frame is received. Optionally, the central processing unit may check the data frame based on the check information in the check field, to determine whether the data frame is correctly received.

In another example, if the specified preamble is not included, this may be due to a demodulation frequency mismatch in the pilot tone signal processing unit. Correspondingly, the central processing unit may indicate a second modulation frequency to the pilot tone signal processing unit. The pilot tone signal processing unit demodulates, based on the second modulation frequency, an electrical signal received next time (as described above, after the pilot tone function of the transmitting end is enabled, the transmitting end continuously sends the optical signal that includes the pilot tone information), to obtain the demodulated information, and outputs the demodulated information to the central processing unit. The central processing unit parses the preamble to determine whether the specified preamble is included, that is, repeats the foregoing steps. In other words, modulation frequencies of the transmitting end and the receiving end may be the same or may be different. A plurality of modulation frequency levels may be set at both the receiving end and the transmitting end. The transmitting end may select one modulation frequency from the modulation frequency levels to perform modulation, and the receiving end may select one modulation frequency from the modulation frequency ranges to perform demodulation. If a demodulation error occurs, another modulation frequency may be switched to repeat the foregoing procedure.

In a possible implementation, if a correct preamble cannot be restored (that is, demodulated and parsed) at all optional modulation frequencies, the central processing unit may generate parsing failure indication information. The central processing unit may transmit the parsing failure indication information to user equipment through a transmission port of the detection instrument. Alternatively, the central processing unit may display the parsing failure indication information on the display.

In this embodiment of this application, the central processing unit may send the link information to the user equipment (for example, an electronic device such as a printer, a tablet computer, or a computer) through the transmission interface (not shown in the figure) of the detection instrument. The user equipment may print or display the link information.

Optionally, the central processing unit may alternatively send the link information to the network management device through the transmission interface. The network management device can improve the topology of the optical communication network based on the link information.

For example, FIG. 9 is used as an example. It is assumed that a user clamps the detection instrument on the ODF 1. The detection instrument may obtain an optical signal in an optical fiber connected to the ODF 1, and obtain link information through parsing, including but not limited to source end information, destination end information, and path routing information. The detection instrument displays the obtained link information on the display. The operator may determine, based on the path routing information in the link information, whether a jumper port (that is, a port connected to a to-be-detected optical fiber) at the ODF 1 is correct. In addition, the operator may determine, based on the path routing information, whether ports of other intermediate devices are correct. For example, after reading each intermediate device indicated in the path routing information and a connection port that corresponds to the intermediate device, the operator may separately clamp the detection instrument on corresponding ports, and determine whether path routing information indicated at the ODF 1 is consistent with the displayed path routing information.

Optionally, the detection method in this application may be further applied to a system setup or topology update scenario. For example, in a case in which a topology of a communication link is incomplete, the operator may clamp the detection instrument on each port of an ODF. In this example, because topology information is incomplete, the link information obtained by the detection instrument may not include the path routing information, or may include only a part of the path routing information. Certainly, the path routing information may be correct or may be incorrect. The operator may determine a topology of the optical communication link by operating the link information obtained by the detection instrument on site. The operator may update a network topology on a network device side based on the link information. After the topology of the network device is updated, updated link information may be delivered to the network device.

In a possible implementation, as described above, the extension information may include transmitting optical power information. Optionally, the extension information may further include pilot tone depth information, which indicates a pilot tone depth used when the transmitting end of the optical signal generates the optical signal. For example, the transmitting optical power information indicates that the optical power is 0 dBm, and the pilot tone depth information indicates that the pilot tone depth is 8%. After obtaining the link information, the detection instrument may obtain the transmitting optical power information and the pilot tone depth information.

For example, the detection instrument may obtain an amplitude of the pilot tone signal based on the obtained optical signal and a pilot tone signal obtained after demodulation, to obtain strength information of an optical signal currently to be tested.

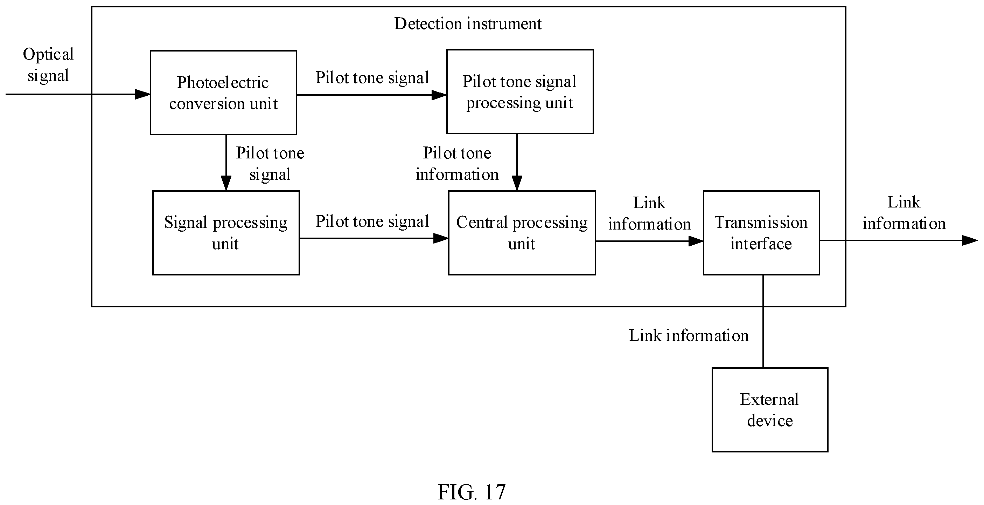

FIG. 17 is an example diagram of a structure of another detection instrument. With reference to FIG. 17, the detection instrument may further include a signal processing unit and a transmission interface. The photoelectric conversion unit outputs one channel of pilot tone signal to the pilot tone signal processing unit to restore the pilot tone signal, to obtain link information. For specific implementation, refer to FIG. 16. Details are not described herein again. The other channel of pilot tone signals is output to the signal processing unit. The signal processing unit is configured to perform processing such as shaping, amplification, and analog-to-digital conversion on an electrical signal (that is, the pilot tone signal). Usually, a low-pass filter, an operational amplifier, and an analog-to-digital converter may be selected. This is not limited in this application. A processed pilot tone signal is input to the central processing unit, and the central processing unit may calculate strength of an input optical signal based on the pilot tone signal. Specifically, after analog-to-digital conversion, a shaped and amplified electrical signal is output to the central processing unit. The central processing unit may perform digital signal processing on the signal to obtain the strength of the input optical signal. For example, the detection instrument may obtain an amplitude of the pilot tone signal based on the obtained pilot tone signal, that is, the peak-to-peak value P_wt of an optical power modulation swing of an optical power modulation swing. In addition, the detection instrument may obtain the average value P_avg of optical power based on pilot tone depth information and the peak-to-peak value P_wt of an optical power modulation swing. Usually, the average optical power may represent an optical power value (that is, optical signal strength) of an input optical signal. Correspondingly, the operator may calculate an approximate distance between a current test point and the transmitting end based on an optical power value obtained through actual detection and the transmitting optical power information in the link information and in combination with an optical fiber type and a networking type. For example, in a transmission scenario in which the transmitting end obtained by the detection instrument is 0 dBm, there is no optical splitter, a G.652 optical fiber is used, and a wavelength is 1550 nm, if the optical power value at a to-be-tested point is -2 dBm, it can be roughly estimated that a transmission distance is 10 km. Based on the distance, if a weak optical signal fault occurs on the to-be-detected optical communication link, the detection instrument may also be used to perform segmented testing on the optical communication link, to obtain optical power values at different positions on the to-be-detected optical fiber, and determine a specific position of the weak optical signal fault based on a link attenuation value.

Still with reference to FIG. 17, optionally, the transmission interface may be a communication interface, for example, may be a Wi-Fi, Bluetooth, or network interface, and may send the link information to another device, for example, a mobile phone or a network management device, based on different communication protocols. Optionally, the transmission interface may also be connected to another external device, for example, a printer or a screen, through a data cable. Optionally, the detection instrument may also include an input/output device such as a display, a touchscreen, or a keyboard. A user can set a parameter using the touchscreen or the keyboard.

### 3. Second network device side:

FIG. 19 is an example diagram of a structure of a photoelectric conversion module on the second network device side. With reference to FIG. 19, the photoelectric conversion module includes but is not limited to a photoelectric conversion unit, a pilot tone signal processing unit, a signal demodulation unit, a central processing unit, and the like.

The photoelectric conversion unit is configured to: perform optical-to-electrical conversion on an optical signal, and output an electrical signal. Optionally, the photoelectric conversion unit outputs a low-frequency signal (for example, may be a pilot tone signal) to the pilot tone signal processing unit, and outputs a high-frequency signal (for example, may be a service signal) to the signal demodulation unit.

The signal demodulation unit is configured to: demodulate a service electrical signal and output service information.

The pilot tone signal processing unit is configured to extract, restore, and shape a pilot tone signal (that is, a pilot tone electrical signal).

The central processing unit is configured to obtain link information.

For specific implementations of the pilot tone signal processing unit and the central processing unit, reference may be made to a detection instrument end. Details are not described herein again.

Optionally, an optical module at the receiving end may determine, based on obtained source end device information and destination end device information, whether a port connected to an optical fiber on a local side is correct. Optionally, the receiving end may report obtained link information to the network management device, so that the network management device side may identify a network topology based on the link information.

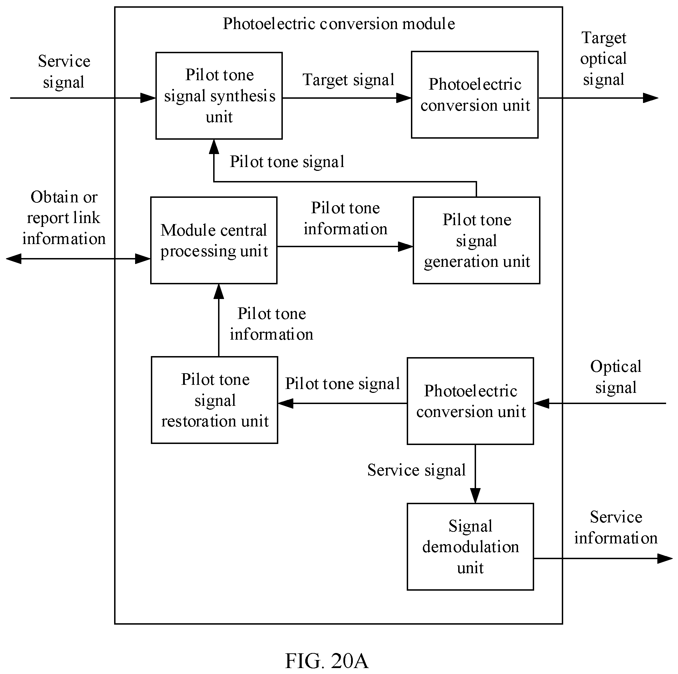

In a possible implementation, the optical module may be used as a signal transmitting end, or may be used as a signal receiving end. Correspondingly, the optical module may have an optical signal generation function and an optical signal parsing function. To distinguish between different units, a unit configured to generate a pilot tone signal is referred to as a pilot tone signal generation unit, and a unit configured to restore a pilot tone signal is referred to as a pilot tone signal restoration unit. FIG. 20A is an example diagram of a structure of a photoelectric conversion module. With reference to FIG. 20A, the module includes but is not limited to a pilot tone signal synthesis unit, a photoelectric conversion unit, a module central processing unit, a pilot tone signal generation unit, a pilot tone signal restoration unit, a signal demodulation unit, and the like. The module central processing unit may be configured to obtain link information, and may be further configured to report the link information. For descriptions of other modules, refer to related content in FIG. 10A and FIG. 19. Details are not described herein again.

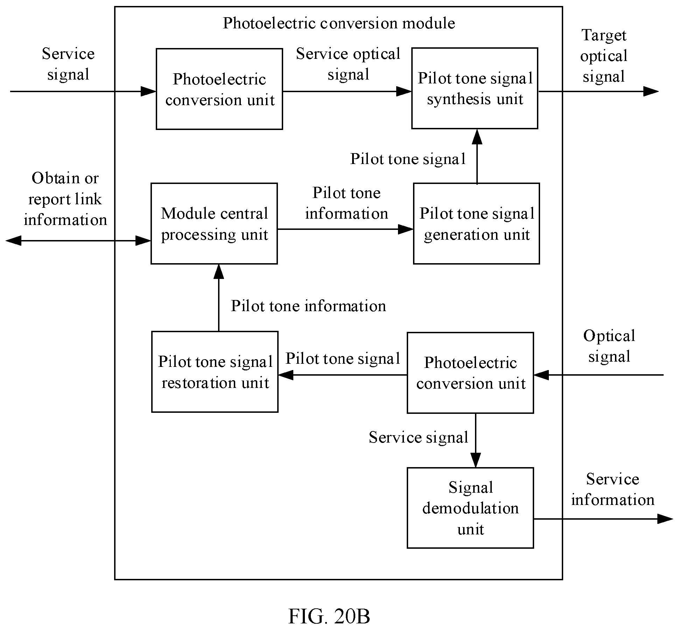

FIG. 20B is an example diagram of a structure of a photoelectric conversion module. With reference to FIG. 20B, the module includes but is not limited to a pilot tone signal synthesis unit, a photoelectric conversion unit, a module central processing unit, a pilot tone signal generation unit, a pilot tone signal restoration unit, a signal demodulation unit, and the like. The module central processing unit may be configured to obtain link information, and may be further configured to report the link information. For descriptions of other modules, refer to related content in FIG. 10B and FIG. 19. Details are not described herein again.

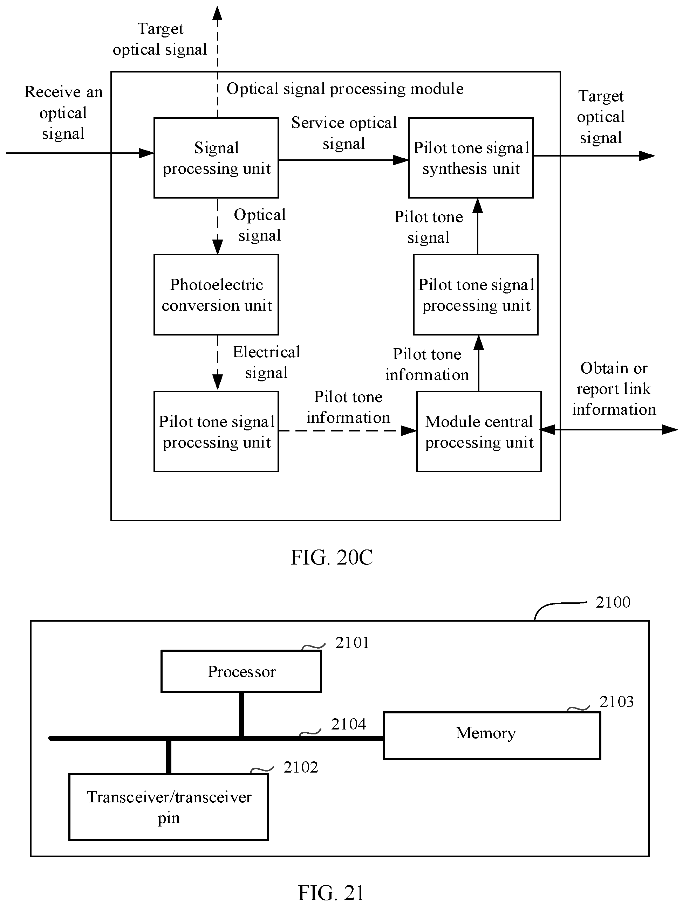

FIG. 20C is an example diagram of a structure of a signal processing module. With reference to FIG. 20C, the module includes but is not limited to a pilot tone signal synthesis unit, a photoelectric conversion unit, a module central processing unit, a pilot tone signal generation unit, a pilot tone signal restoration unit, a signal processing unit, and the like. For example, in a scenario in which an optical signal that includes a modulation signal needs to be generated (for example, a procedure shown by solid-line arrows), the signal processing unit outputs a received optical signal (that is, a service optical signal) to the pilot tone signal synthesis unit, and the pilot tone signal synthesis unit may generate a target optical signal. For a specific implementation, refer to FIG. 10C. Details are not described herein again. For example, in a scenario in which link information needs to be obtained (for example, a procedure shown by dashed-line arrows), the signal processing unit outputs a received optical signal (that is, a target optical signal including a pilot tone signal) to the photoelectric conversion unit for performing a pilot tone signal parsing procedure. For a specific procedure, refer to FIG. 16. Details are not described herein again. In addition, after performing signal processing (for example, amplification processing) on the target optical signal, the signal processing unit outputs a processed target optical signal. Optionally, the pilot tone signal parsing procedure may also be performing parsing processing based on the target optical signal output by the signal processing unit. Correspondingly, the photoelectric conversion unit may be disposed after the signal processing unit, to receive the target signal output by the signal processing unit. It may be understood that the signal processing unit outputs two channels of target optical signals. One channel of signal is output to an optical fiber through an interface. The other channel of signal is output to the photoelectric conversion unit, and is used to perform the pilot tone signal parsing process.

In a possible implementation, in a scenario in which the optical signal processing module generates the target optical signal, an optical signal received by the optical signal processing module is an optical signal that does not include the pilot tone signal, that is, is a service optical signal. If a module that can generate the optical signal including the pilot tone signal exists in an upstream of the optical signal processing module, for example, a photoelectric conversion module, correspondingly, an operator controls the photoelectric conversion module to stop generating the optical signal including the pilot tone signal, and the photoelectric conversion module outputs the service optical signal. The downstream optical signal processing module may process the service optical signal to obtain the target optical signal including the pilot tone signal.

FIG. 17 is a block diagram of an apparatus 2100 according to an embodiment of this application. The apparatus 2100 may include a processor 2101 and a transceiver/transceiver pin 2102, and optionally, further include a memory 2103. The processor 2101 may be configured to: perform steps performed by the optical module in the methods in the foregoing embodiments, control a receive pin to receive a signal, and control a transmit pin to send a signal.

Components of the apparatus 2100 are coupled together through a bus 2104. In addition to a data bus, the bus system 2104 further includes a power bus, a control bus, and a status signal bus. However, for clear description, various types of buses in the figure are marked as the bus system 2104.

Optionally, the memory 2103 may be used for storage instructions in the foregoing method embodiments.

It should be understood that the apparatus 2100 according to this embodiment of this application may correspond to the optical module, the detection device, or the network device in the methods in the foregoing embodiments, and the foregoing and other management operations and/or functions of the components in the apparatus 2100 are separately used to implement corresponding steps of the foregoing methods. For brevity, details are not described herein again.

Based on a same technical concept, an embodiment of this application further provides a computer-readable storage medium. The computer-readable storage medium stores a computer program, the computer program includes at least one segment of code, and the at least one segment of code may be executed by an apparatus, to control the apparatus to implement the foregoing method embodiments.

Based on a same technical concept, an embodiment of this application further provides a computer program. When the computer program is executed by an apparatus, the foregoing method embodiments are implemented.

The program may be all or partially stored in a storage medium packaged with a processor, or may be partially or all stored in a memory not packaged with a processor.

Based on a same technical concept, an embodiment of this application further provides a processor. The processor is configured to implement the foregoing method embodiments. The processor may be a chip.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make many modifications without departing from the purposes of this application and the protection scope of the claims, and all the modifications shall fall within the protection of this application.

## Claims

1. A detection method, comprising:
sending, by a first network device, a target optical signal to a second network device via an optical communication link between the first network device and the second network device, wherein the target optical signal comprises a service optical signal that comprises service information and a detection optical signal that comprises link information, and the link information comprises at least one of device information of the first network device, device information of the second network device, and path routing information of the optical communication link;
obtaining, by a detection device, the target optical signal transmitted on the optical communication link, wherein the detection device is in contact with an exterior of the optical communication link;
obtaining, by the detection device, the link information based on the detection optical signal in the target optical signal; and
receiving, by the second network device, the target optical signal.

2. The method according to claim 1, wherein obtaining, by the detection device, the target optical signal transmitted on the optical communication link comprises:
obtaining, by the detection device, the target optical signal coupled out from the optical communication link.

3. The method according to claim 1, wherein a contact portion between the optical communication link and the detection device is curved.

4. The method according to claim 1, wherein a signal frequency of the detection optical signal is lower than a signal frequency of the service optical signal.

5. The method according to claim 1, wherein the device information of the first network device comprises at least one of the following:
identification information of the first network device, identification information of a connection port, corresponding to the optical communication link, in the first network device, and extension information.

6. The method according to claim 1, wherein the device information of the second network device comprises at least one of the following:
identification information of the second network device, identification information of a connection port, corresponding to the optical communication link, in the second network device, and extension information.

7. The method according to claim 1, wherein the optical communication link passes through at least one intermediate device, and the path routing information comprises at least one of the following:
identification information of the intermediate device, and identification information of a connection port, corresponding to the optical communication link, in the intermediate device.

8. The method according to claim 5 or 6, wherein the extension information comprises at least one of the following:
module information of an optical module corresponding to the connection port, transmission distance information of the target optical signal, code pattern information of the target optical signal, wavelength information of the target optical signal, optical power information of the target optical signal, and alarm information.

9. The method according to any one of claims 1 to 8, wherein the detection optical signal comprises a frame header field and a data field; and
the data field carries the link information, and the frame header field comprises a preamble.

10. The method according to claim 6, wherein the data field comprises at least one of the following:
a first field that carries the device information of the first network device, a second field that carries the device information of the second network device, and a third field that carries the path routing information, wherein
the first field comprises a first marker, and the first marker indicates that the first field is used to carry the device information of the first network device;
the second field comprises a second marker, and the second marker indicates that the second field is used to carry the device information of the second network device; and
the third field comprises a third marker, and the third marker indicates that the third field is used to carry the path routing information.

11. The method according to claim 1, wherein obtaining, by the detection device, the link information based on the detection optical signal in the target optical signal comprises:
performing, by the detection device, optical-to-electrical conversion on the target optical signal, to obtain a detection signal.

12. The method according to claim 11, wherein obtaining, by the detection device, the link information based on the detection optical signal in the target optical signal comprises:
decoding, by the detection device, the detection signal in a preset coding manner, to obtain the link information.

13. The method according to any one of claims 1 to 12, wherein sending, by the first network device, the target optical signal to the second network device via the optical communication link between the first network device and the second network device comprises:
obtaining, by the first network device, the link information;
encoding, by the first network device, the link information in the preset coding manner, to obtain encoded link information; and
obtaining, by the first network device, the target optical signal based on the encoded link information.

14. The method according to claim 13, wherein obtaining, by the first network device, the target optical signal based on the encoded link information comprises:
processing, by the first network device, the encoded link information, to obtain the detection signal;
obtaining, by the first network device, a target electrical signal based on the detection signal and the service signal that comprises the service information; and
performing, by the first network device, optical-to-electrical conversion on the target electrical signal, to obtain the target optical signal.

15. The method according to claim 13, wherein obtaining, by the first network device, the target optical signal based on the encoded link information comprises:
processing, by the first network device, the encoded link information, to obtain the detection signal;
performing, by the first network device, optical-to-electrical conversion on the service signal that comprises the service information, to obtain the service optical signal; and
modulating, by the first network device, the service optical signal based on the detection signal, to obtain the target optical signal.

16. The method according to claim 1, after receiving, by the second network device, the target optical signal, further comprising:
obtaining, by the second network device, the link information based on the detection optical signal in the target optical signal; and
obtaining, by the second network device, the service information based on the service optical signal in the target optical signal.

17. A detection method, applied to a detection device, wherein the detection device is in contact with an exterior of an optical communication link between a first network device and a second network device, the first network device exchanges data with the second network device via the optical communication link, and the method comprises:
obtaining a target optical signal transmitted on the optical communication link, wherein the target optical signal comprises a service optical signal that comprises service information and a detection optical signal that comprises link information, and the link information comprises at least one of device information of the first network device, device information of the second network device, and path routing information of the optical communication link; and
obtaining the link information based on the detection optical signal in the target optical signal.

18. The method according to claim 17, wherein obtaining the target optical signal transmitted in the optical communication link comprises:
obtaining the target optical signal coupled out from the optical communication link.

19. The method according to claim 17, wherein a contact portion between the optical communication link and the detection device is curved.

20. The method according to claim 17, wherein a signal frequency of the detection optical signal is lower than a signal frequency of the service optical signal.

21. The method according to claim 17, wherein obtaining the link information based on the detection optical signal in the target optical signal comprises:
performing optical-to-electrical conversion on the target optical signal, to obtain a detection signal; and
decoding the detection signal in a preset coding manner, to obtain the link information.

22. An optical module, comprising a module central processing module, a signal processing module, and a sending port, wherein
the module central processing module is configured to obtain link information, the link information comprises at least one of device information of the first network device, device information of a second network device, and path routing information of an optical communication link between the first network device and the second network device;
the signal processing module is configured to obtain a target optical signal based on the link information, and the target optical signal comprises a service optical signal that comprises service information and a detection optical signal that comprises the link information; and
the sending port is used to send the target optical signal to the second network device.

23. A network device, comprising:
one or more processors;
a memory; and
one or more computer programs, wherein the one or more computer programs are stored in the memory, and when the computer program is executed by the one or more processors, the network device is enabled to perform the method performed by the first network device according to any one of claims 1 to 16.

24. A detection device, comprising:
one or more processors;
a memory; and
one or more computer programs, wherein the one or more computer programs are stored in the memory, and when the computer program is executed by the one or more processors, the detection device is enabled to perform the method performed by the detection device according to any one of claims 17 to 21.

25. A detection system, comprising the first network device, the second network device, and the detection device according to any one of claims 1 to 16.
